# EUROPEAN PATENT SPECIFICATION

(11) **EP 0 601 064 B1**
(45) Date of publication and mention of the grant of the patent: **22.10.1997**
(21) Application number: 92918982.7
(22) Date of filing: 20.08.1992
(51) Int. Cl.: G07G 1/00

(54) **PRODUCT INFORMATION SYSTEM FOR SHOPPERS**
WARENINFORMATIONS-ANZEIGESYSTEM FÜR KUNDEN
SYSTEME D'INFORMATION SUR LES PRODUITS A L'USAGE DES PERSONNES FAISANT LEURS COURSES

(30) Priority: 20.08.1991 US 747727; 04.05.1992 US 878100
(43) Date of publication of application: 15.06.1994
(73) Proprietor: DIGICOMP RESEARCH CORPORATION, Ithaca, NY 14850 (US)
(72) Inventor: GUPTA, Om, P., Ithaca, NY 14850 (US); RICKETSON, Robert, C., Ithaca, NY 14850 (US); BAILEY, Jack, F., Endwell, NY 13060 (US); SHILEPSKY, Carol, C., Aurora, NY 13062 (US); SHILEPSKY, Arnold, C., Aurora, NY 13062 (US); CLINCH, Marvin, R., Oneida, NY 13421 (US)
(74) Representative: Jones, Graham H.
(86) International application number: US9206992
(87) International publication number: WO9304449

(56) References cited:
- EP-A- 167 072
- EP-A- 170 194
- EP-A- 176 959
- EP-A- 245 569
- EP-A- 374 877
- WO-A-91/14984
- DE-A- 2 823 509
- US-A- 4 654 514
- US-A- 4 833 308

## Description

### FIELD OF THE INVENTION

The present invention relates to product information systems and more particularly relates to a product information system which provides shoppers with individual product information, such as prices, without requiring retail establishments to individually price label each item and/or provides a shopper with product information correlated with the shopper's personal buying habits and promotes alternate products.

### BACKGROUND OF THE INVENTION

The need for individual package price labels for products sold in supermarkets is currently a significant issue. Almost all products sold today are factory labeled with a uniquely identifying UPC (Universal Product Code) bar code. When scanned at a supermarket checkout station this initiates an automated retrieval of price from an in-store computer database. Industry spokespersons claim that this form of checkout system virtually eliminates the need, and the associated labor costs, for additional price labeling of individual packages, the cost savings resulting in lower prices to the consumer. Furthermore, they claim, the consumer is still provided adequate pricing information in the form of a label on the shelf where the product is displayed.

On the other hand, consumer advocate groups claim that eliminating individual price labeling is unfair to the consumer because the price stored in the checkout counter computer database may be higher than that listed on the shelf label. Studies have found that discrepancies between the shelf labels and the price stored in the checkout counter computer database are frequent. A price label on the package has been the only previous practical means by which shoppers can verify that they are being charged the price they expect at the checkout station.

Even if products are labeled individually, discrepancies may still exist between prices in the checkout counter computer database and on individual pricing labels. This is especially true for competitive, high-volume supermarkets where prices change weekly, or more frequently, in response to product availability and promotional sales. The time required to update shelf and individual price labels is clearly much greater than that required for the simple keyboard entries needed to update the computer database. In the interim, price discrepancies will still exist.

If an individual product pricing method were to display to the shopper the price currently in the checkout counter database, there would be no discrepancies. In addition, if this method could provide shopper readable individual product pricing information without requiring physically affixing price labels, it would provide industry its desired labor cost savings without depriving shoppers of their desired pricing information.

When bar code scanners were first introduced, some supermarkets provided bar code scanner aisles for customers to use by themselves, before going through the actual checkout counter. Portions of a transcript from "A Joint Public Hearing Into The New York State Item Pricing Law", discusses this practice and the problems associated with it. In this hearing, the president of Price Chopper Supermarkets, Neil Golub, testified that *"[Providing a sample scanning device for customer use only] was done for years. Remember, scanning has been around for many years now and when we first opened scanning stores, the way to interchange with your customers was to provide a scanning unit so that they could try the items and develop a credibility with the system.* " However, this system did not provide the customer with access to the store database while the shopper was comparing individual items during shopping. The shopper would still have to remember what the shelf price was until be or she walked over and gained access to a test scanning unit. The disadvantage from the establishment point of view was that if the shopper decided not to purchase the product after seeing the price, the shopper would often not return the product to its proper place in the store shelves. Heretofore, apparatus and method for providing a shopper immediate and direct access to a store database of product information while shopping has been unrealized.

Many retail product manufacturers advertise vigorously. Often this advertising comes at great expense and its effectiveness can only be indirectly measured. A system that allowed product manufacturers to advertise at the point of purchase would increase the effectiveness of advertising and allow for advertisers to more accurately measure the effectiveness of an advertisement. Heretofore, such a promotion system has not been available.

US Patent No. 4,071,740, given to Gogulski, entitled "Mobile Automated Shopping System", teaches a mobile automated shopping system which is continuously communicates with a central computer. The weight of each item is used as verification to ensure that the item is scanned correctly by the shopper. It is the central computer that transmits the pricing data back to the shopper's display; but the system does not provide for storing product information data (including pricing data) in the shopper's portable unit for all the items available for sale in the retail store. It cannot be assumed that the Gogulski central computer can update the product information database in the portable units. In any event, Gogulski show portable units that are "slaved" to a central computer and cannot act independently thereof. Such a technique is impractical for a relatively great number of active shopping carts used simultaneously in a relatively small area, such as a supermarket. Furthermore, customers have no control, partial or otherwise, over their individual units.

US Patent No. 4,569,421, given to Sandstedt, entitled "Restaurant or Retail Vending Facility", teaches a vending system which transmits ordering information by a wireless bi-directional communications link. Like Gogulski, Sandstedt does not teach a remote unit. Furthermore, neither Gogulski or Sandstedt teach apparatus and method for updating the remote units that assure the shopper that the cashier's counter pricing information is exactly the same pricing information as provided to the shopper while shopping.

US Patent No. 4,929,819 given to Collins, entitled "Method and Apparatus for Customer Performed Article Scanning in Self-Service Shopping", teaches means for identifying inconsistencies in the shopper's scanning of goods and what the shopper actually placed in the cart such that a retail store's cost of doing business is reduced by the elimination of the step of scanning at the check-out counters. Collins teaches means for electrically connecting a remote unit to a cashier's unit and suggests that these remote units could be secured to carts. Collins does not teach means for comparing the pricing information of products in the remote unit with the pricing information in the cashier's computer or the total purchase scanned by the cashier. Collins teaches method and apparatus for relieving personnel of the retail establishment, whereas the present applicant teaches method and apparatus that assure the shopper that the cashier's counter pricing information is exactly the same pricing information as provided to the shopper by the remote unit. Collins is silent on apparatus and method for updating his remote units, however, in column 5, lines 27-32, he refers to a recharging coupling but does not state that he uses said coupling for updating. Therefore, it is presumed that Collins relies upon the state of the art as taught by Gogulski.

Some patents teach bar code readers for business applications. US Patent No. 5,023,438, given to Watatsuki et at, entitled "A portable data input apparatus with different display modes" teaches a pen type bar code reader that can invert the display message on the display device in response to an appropriate detection signal. Wakatsuki also teaches the implementation of a small transmitter/receiver exchanging messages with a data processing device. US Patent No. 5,012,642, given to Chadima et at, entitled "Instant portable bar code reader" teaches a bar code reader system that provides a hand held bar code reader attached to a power unit and a processing unit that can be constructed to be portable. US Patent No. 4,766,299, given to Tierney et at, entitled "Hand-mounted bar code reader" teaches a bar code reader that fits on a user's hand and allows the user to use that finger and all others of that hand for other purposes such as using a cash register. US Patent No. 4,818,847, given to Hara et al, entitled "Apparatus for optically reading printed information" teaches a new embodiment for a bar code reader. US Patent No. 4,983,818, given to Knowles, entitled "Data acquisition system with laser scanner module" teaches that a light scanner device might include a removable data terminal wherein the data terminal can be downloaded with new information and instructions from a host computer. US Patent No. 5,019,694, given to Collins, entitled "Overhead scanning terminal" teaches an overhead bar code scanning terminal for use at a checkout counter in a retail store. US Patent No. 3,978,318, given to Romeo et at, entitled "Hand-operated scanner" teaches a bar code reader that fits on a user's finger and allows the user to use that finger and all others of that hand for other purposes such as using a cash register.

In United States Patent No. 4,973,952, issued to Malec et at on November 27, 1990 for "Shopping Cart Display System", a shopping system for advertising products to shoppers is illustrated. The display system in each cart is triggered by transmitters located in each aisle. The Malec system presents an advertisement when a potential shopper is physically close to a product, regardless of whether the shopper has a need for it. When the cart enters an aisle, the shopper is informed of special products located therein. For example, the Malec system may present a toothpaste advertisement whenever a shopper passes through the oral hygiene section of the store. The Malec system does not interact with the shopper through a scanner, and advertising is not precisely correlated with the buyer's own current product selections or buying habits.

EP-A-0 170 194 teaches remote product information units, which may be in the form of portable devices, comprising data processing means with decentralized database memories and bar-code scanners. However, this reference teaches that the database memory of remote product information unit can reside on or be updated by floppy disk. This is problematic in that users will not know whether the information on the floppy disk is current.

Each of the patent publications listed above, fail to teach apparatus, method or use for a bar code reader, data manipulation and display capability, that insures current, accurate product information systems for use by shoppers. Heretofore, a simple and attractive solution to the individual pricing problem for both industry and consumer has not been developed.

None of the patents cited above teach a product information system to promote alternate and complimentary products related to the customer's purchasing interest at the time the purchasing decision is being made by the customer. According to US-A-4 833 308, such promotion takes place only at the checkout counter.

The present invention includes a product information system for providing a shopper with current, accurate information on individual products within a retail establishment which uses bar code scanners at cashier counters and upon individual, stand-alone, portable, remote product information units under shopper control, to record shopper purchases, wherein the product information system comprises: a plurality of stand-alone, portable, remote product information units, each unit being updatable with information from a remote source concerning each product within the retail establishment, each of the units to be provided for each of the shoppers within the establishment who desire access to the product information as they traverse the establishment, each of the remote stand-alone units including: i) a bar code scanning device operatively connected to a microcomputer and capable of decoding bar codes on individual products, ii) a microcomputer with database memory capable of storing and retrieving updatable product information related to each bar code of a product scanned by a shopper using the bar code scanning device to obtain product information, iii) means for displaying the product information to the shopper, and operatively connected to the microcomputer, iv) control means operatively connected to the microcomputer for providing the shopper with limited user-function control of the microcomputer, including manipulation of selected product information, v) power supply means for supplying each remote product information unit with electrical power, and vi) an input device operatively connected to the microcomputer through which the database memory can be updated; wherein the product information system also comprises a data update system operatively associated with each of the input devices of the plurality of stand-alone, portable, remote product information units for updating the stand-alone, portable, remote product information units with updated product information related to each of the bar codes, such that the stand-alone, portable, remote product information units are removable from the data update system for use by the respective shoppers, and are restorable on the data update system after use by the shoppers so as to be updated with the updated product information and the remote units indicate whether the remote units have been updated with updated product information; and wherein the product information system also comprises means for supplying the data update system with updated product information, including product pricing information, such that the stand-alone, portable, remote product information units are provided with the same updated product pricing information as provided at the bar code scanners at the cashier counters.

The remote units can be provided with means for securing the unit such that the unit can be easily used by shoppers, but can only be removed by agents of the retail establishment. Means are also provided for assuring the units are not removed from the retail establishment in an authorized manner. The remote unit can include a rapidly rechargeable battery and an external connection mechanism such that the remote unit is updated with product information and the rechargeable battery is rapidly recharged as the unit is stored in a staging area. The staging area can also include means for assuring that the units are updated before being used again. The system can also include means for comparing a product information list of items to be purchased accumulated by the shopper with a corresponding list recorded at the cashier's counter to resolve any discrepancies in the purchase information.

In accordance with the present invention, there is also provided an inference-based advertising and information system that is, in part, initiated by reading the Universal Product Code (UPC) bar codes found on most retail items. The invention incorporates current purchase input data and special store promotions with an artificial intelligence (AI)-based shopper-interactive shopping system, using a computer carried on each shopper's shopping cart. It makes the shopping experience more productive and interesting and provides a platform for promoting products more effectively. Information related to the interest of the shopper in various products, obtained by the shopper's product bar code scanning, is used to selectively advertise competing and complementary products to the shopper at the time that he is making the decision to buy a product. Acquired and inferred knowledge about the shopper is combined with the shopper's proximity to advertisable competing or complementary products on other shelves, in order to further select the advertisements and information that will appear on the shopping cart display. The PISYS invention presents advertising copy for a carefully selected product not only when the shopper is close to an item, but also when the shopper expresses interest in it. Thus, PISYS intervenes at the exact moment when the shopper makes a product decision. PISYS presents ads which are attuned to the shopper's expressed interests. The shopper is likely to perceive such ads as a positive adjunct instead of a minor nuisance to be ignored. For example, a shopper scanning an item such as a soft drink might be shown advertisements for a competing soft drink, or even a store-generic soft drink. Such an advertisement selection could be based on the highest store margins or advertising/promotion fees paid by manufacturers and distributors. The system might also display complementary products such as nuts, chips and dips, in case the shopper has purchased beer or wine.

The system further defines the selection of advertisements according to the general interests of the shopper, and the shopper who uses food stamps is such an example. If a person questions the system repeatedly for information about food stamp eligibility of products, the system will not advertise expensive cheeses and wines. Furthermore, shopper cost sensitivity may be indicated if the system displays an advertisement for a competing lower-priced item that is subsequently purchased by the shopper.

The system maintains a Preference and Purchase Profile (PPP) for each customer. The PPP represents information about a shopper's interests and tastes, entered voluntarily the first time that the shopper uses the system. The PPP also contains a set of historical parameters which characterizes the shopper's buying habits over time. These range from statistical characterizations of product classes which a shopper purchases most frequently to a shopper's movement through the store.

Provisions may be made for each regular shopper to have a custom PPP stored in an in-house central computer and entered into the shopper's remote unit when the shopper enters the store. Information necessary to initiate this process could be stored on a store card given to the shopper and read with a card reader at the entrance to the store. Basic shopper information could be stored on the shopper's card and read by the scanner on the remote unit. Alternatively, the remote unit could be automatically initialized via infrared (IR) transmission with a shopper's PPP from the main computer at the time the shopper enters the store.

The remote unit keeps time-stamped lists of products scanned by the shopper, advertised to the shopper and purchased by the shopper. The lists can be downloaded to the central store computer via infrared communication to the check-out counter terminal at the time of check-out. An IR communication system between the check-out counter and shopping cart computer has been described in the aforementioned co-pending patent application. This list would be used to update a regular shopper's PPP on the main computer. Such a list could also be used to determine if the advertisement was effective in changing the decision of the buyer. The system measures effectiveness by tracking the time when the advertisement was displayed and the later moment when the item was added by the shopper to his shopping list. This information, downloaded to the in-house central computer, could be analyzed to determine the effectiveness of the advertising, as well as the billing of advertising fees to the manufacturers and/or distributors.

For example, the advertising fee structure could be based on a flat fee, plus the number of times an advertisement is displayed, plus the number of times the advertisement was effective in changing the mind of the shopper. Of course, different weights will be applied to the different factors discussed above. Automated billing software could easily be developed by anyone skilled in the art of software development.

Since the system described here could increase a store's profits considerably, such software could also calculate the profits that accrue to the store owner because of the use of such advertisement techniques. The software also could project what the profits would have been, if alternative advertising rules had been used. Furthermore, the output of this analysis software could be used to revise the rules governing advertising selection.

The remote unit could be modified to include a larger graphic display. Advertisements could be stored on a video disk and indexed in a list. Several modifications can be incorporated in the software to include, at the shopper's request, functions such as the identification of aisles and shelves where various products are located. It can also be modified to keep a shopper-generated list of products and shelf prices, in case shelf prices are different from the check-out computer-stored prices.

The artificial intelligence software includes a rule-based inference engine that uses several related databases described in detail hereinbelow. Although the discussion hereinafter presented assumes that each remote unit has its own intelligent software running on its own individual computer, an alternative architecture is possible wherein each remote unit acts as a wireless terminal with intelligent software running on a central in-house computer.

### BRIEF DESCRIPTION OF THE DRAWINGS

Figure 1 is a block diagram of a shopper product information system as taught by the present invention.

Figure 2 is a block diagram of the remote unit operation as taught by the present invention.

Figure 3 is a perspective view of a shopper using a shopping cart including a shopper product information remote unit as taught by the present invention.

Figure 4 is a perspective view of a shopping cart including a remote unit as taught by the present invention.

Figure 5 is a perspective view of a shopping cart including a removable remote unit as taught by the present invention.

Figure 6 is a perspective view of a shopper-carried remote unit as taught by the present invention.

Figures 7a-7c are a series of flow charts for the remote unit operational program.

Figure 8 is a front view of the display on one embodiment of a remote unit as taught by the present invention.

Figure 9 is a perspective view of a shopping cart including a remote unit in a shopping cart staging area as taught by the present invention.

Figures 10a and 10b are a perspective view and a cross-scctional view of one embodiment for an external connection mechanism for a remote unit attached to a shopping cart as taught by the present invention.

Figure 11 is a front view of a staging area for portable remote shopper carried units.

Figure 12 is a block diagram of a checkout counter system as taught by the present invention

Figure 13 is a perspective view of a shopper using an interface between the remote unit computer and the cashier's scanner computer to compare the shopper's list of product's purchased and the cashier's list of products purchased.

Figure 14 is a block diagram depicting subsystem functions of the invention.

Figure 15 is a top-level flow chart depicting shopping cart interactions with a shopper.

Figure 16, separated for convenience into Figures 16a and 16b, is a flow chart depicting a portion of the interactions of Figure 15 in greater detail.

Figure 17 is a flow chart depicting functions and operations between the cart computers and the central computer, in accordance with the present invention.

### DETAILED DESCRIPTION OF THE PREFERRED EMBODIMENT

For the purposes of promoting an understanding of the teachings of the present invention, references will now be made to the embodiments illustrated in the drawings and specific language will be used to describe these embodiments. It will nevertheless be understood that no limitation of the scope of the invention is thereby intended, alterations and further applications of the teachings of the present invention as illustrated and described hereinabove is anticipated by those skilled in this art.

The major cause of discrepancies between prices in the computer database and on shelf or individual pricing labels is the inherent inability to update all pricing information sources concurrently. This is especially true for competitive, high-volume supermarkets where prices change weekly, or more frequently, in response to product availability and promotional sales. The time required to update shelf and individual price labels is clearly much greater that required for the simple keyboard entries needed to update the computer database. In the interim, price discrepancies must exist.

Stores could provide a number of scanner units around the store where shopper's can bring products to read the prices. The trouble with this approach is several fold. One, it still leaves a doubt in the shopper's mind that he or she is not being told a different price than the one that will be charged at the checkout counter. The other problem is that if the customer does not like the product after reading its price, he or she is unlikely to replace it on the shelf from where he or she picked it up.

The present invention teaches apparatus, method and new uses for apparatus that provide a simple, efficient and attractive solution to the individual pricing problem for both industry and consumer. The present invention teaches providing individual shoppers with microprocessor units that can scan the bar codes, display the product prices and other derived information and allows manipulation of information such as keeping a list of item's purchased, the total cost, sales tax, etc.. The shopper can carry this unit around with him or her through the store. At the end of shopping the shopper goes to the checkout counter where the purchased items are registered by the sales clerk using bar code scanners. The present invention also teaches that after shopping the shopper's unit is retrieved from the shopper. The shopper's unit is then returned to a staging area. The shopper unit's power is recharged and product information is updated while waiting in this staging area, waiting to be picked up by the next customer.

The present invention teaches that the shopper's unit as well as the checkout counter terminal work from the same product information database so that the shopper get's the most current prices of each product, thus eliminating the present controversy. Each shopper's unit further aids the shopper by keeping a list of and running total of his purchases, a feature particularly useful to those living on a limited budget. However, the possibility of error still exists between the running total in the shopper's unit and the total cost asked for by the sales clerk as the shopper may pick up items without registering in the system. Therefore a mechanism is also provided to automatically retrieve the list from the shopper's unit at the checkout counter comparing the two and resolving the differences. The cashier and the shopper could be provided with a printout of the differences and reexamine the purchase to reconcile the purchase information.

The shopper's units could be mounted on shopping carts or hand held units that can be carried by each shopper. The hand held portable units are more desirable by shopper who carry a basket for purchasing a few items only. However, portable units have a higher risk of being dropped and broken. Since the shopper's units are expected to be a valuable items, means are provided that they can not be taken out of the store. Some local laws require that stores display each item price on the shelf. The present invention teaches the use of one such shopper's unit, along with a printer, to produce labels that can be appropriately put on the shelves displaying the current product prices.

As used hereinabove, the term "portable" means any unit which is capable of being moved about a retail establishment either by a shopper carrying the unit or by connecting the unit to another apparatus (e.g. a shopping cart) which is moved about the establishment by the shopper. As used hereinabove, the term "remote unit" means a unit that is provided to a shopper and stands alone, in that it is not physically connected to any other system when being used by a shopper, however, each unit is operatively connected to the product information system by the frequent use of the data update system.

### Product Information System

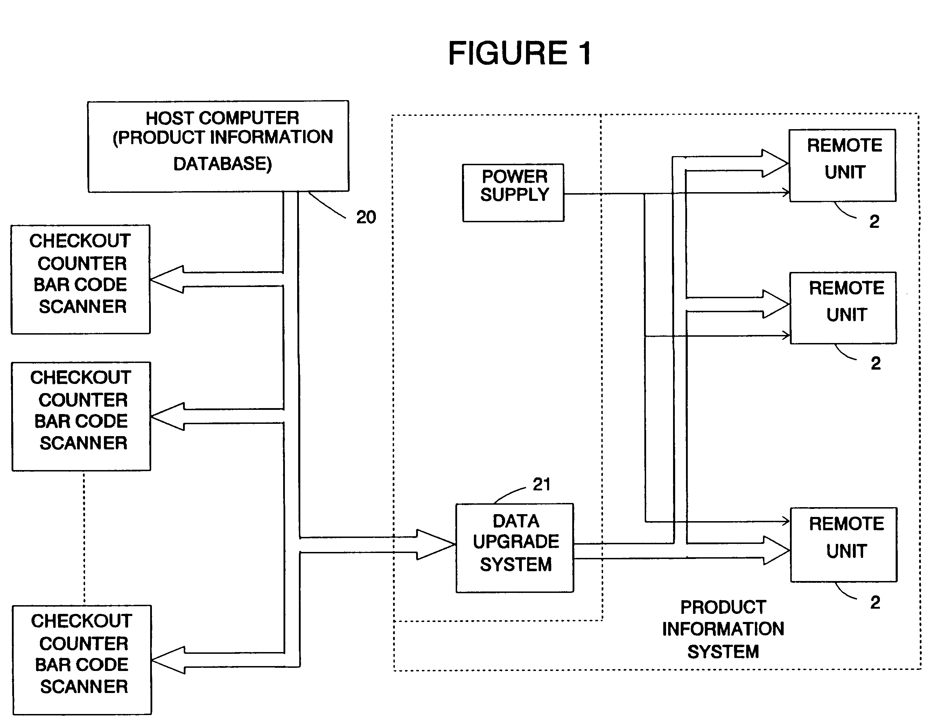

The pricing method of the present invention displays to the shopper the most recent prices in the cashier's counter computer database, therefore there are no discrepancies. In addition, this method provides individual product pricing information without physically affixing price labels, so the industry has its desired labor cost savings without depriving shoppers of their desired services. As shown in figures 1-13, a dedicated portable microcomputer designed to provide the customer on the supermarket floor the ability to scan the bar codes on product packages and to display the database price for the item scanned, is taught herein.

As shown in figure 1, the present invention teaches a product information system for providing a shopper with current, accurate information on individual products within a retail establishment which uses bar code scanners at cashier's counters to record products of the shopper's purchase. The product information system includes a plurality of portable remote product information units to be provided for each of the shoppers within the establishment who desire access to the product information. The product information system also includes a data update system capable of operatively associating with the data input device in the remote unit and updating them with updated product information related to each of the bar codes. The remote units are removable from the data update system for use by the shopper, and are restorable on the data update system after use by the shopper so as to be updated with the updated product information. The data update system is connected to means for supplying the data update system with updated product information, including product pricing information, such that the remote units are provided with the same updated product pricing information as provided at the bar code scanners at the cashier's counters.

The function of the product information system is to control and to maintain a number of portable customer-utilized, remote units which feature means to read the UPC bar code on product packages, to display information about the product, in particular price, and to perform customer-selected manipulations of the stored data. The remote units are portable in that they may be permanently attached to shopping carts which can be wheeled around the store by the shoppers directly. The units are also remote in that a copy of the supermarket's current product information database is stored in memory within each remote unit such that it can be operatively connected to other system elements, yet still be independent of constant physical connection by wires or other means of continuous communication with external devices.

An intermediate computer can interface with an existing supermarket host computer. Whenever a change occurs in the host computer's database, a current copy of the host's product information database is automatically supplied to the intermediate computer. The same host computer controls the database used by the checkout counter terminals. The use of an intermediate computer allows the conversion of the copy of the host's database into a standard format database suitable for storage in the memories of the remote units. The intermediate computer sends data and control signals to a central maintenance system where the remote units are temporarily stored between periods of use by shoppers.

### Remote Units

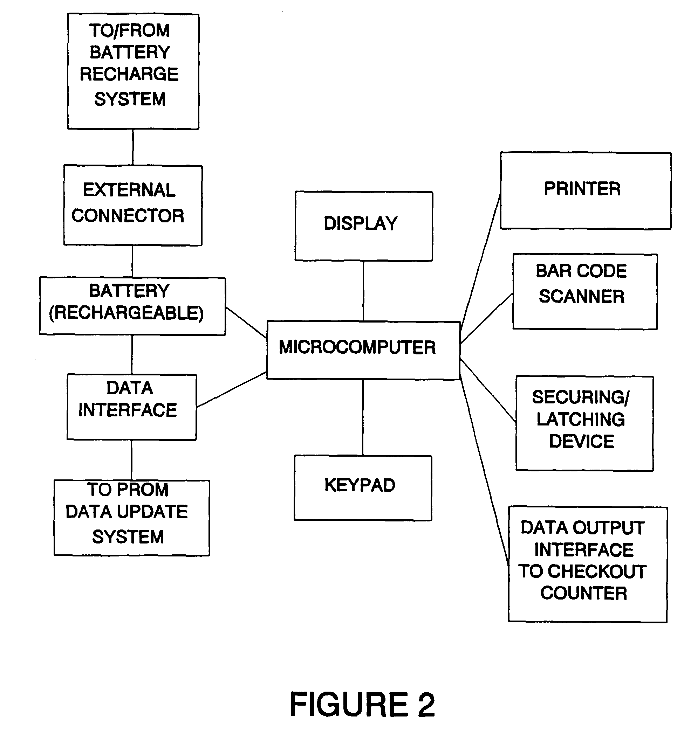

In every embodiment of the present invention, the product information system will include a plurality of portable remote product information units to be provided for each shopper, who desires access to product information, as shown in the block diagram of figure 1. As shown in figure 2, each of the remote units includes: 1) a bar code scanning device capable of decoding bar codes on individual products, 2) a microcomputer with database memory capable of storing and retrieving updatable product information related to each of the bar codes, 3) means for displaying the product information to the shopper, 4) means for providing the shopper with limited user-function control of the microcomputer, including manipulation of selected product information, 5) means for supplying the unit with electrical power, and 6) an input device through which the database memory can be updated.

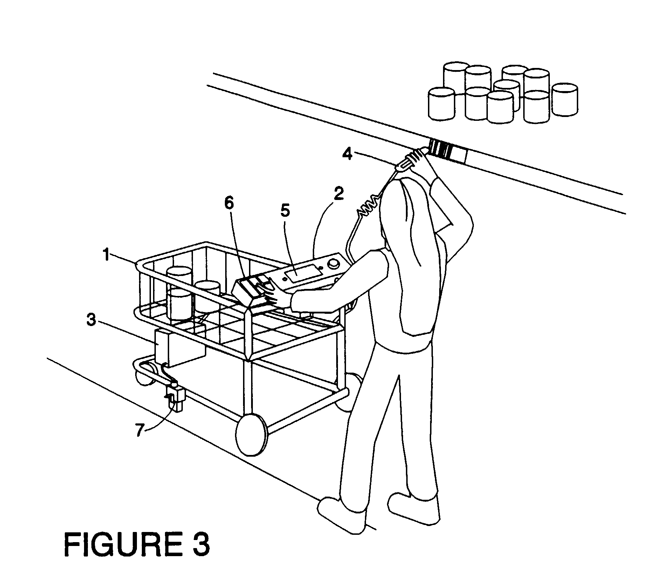

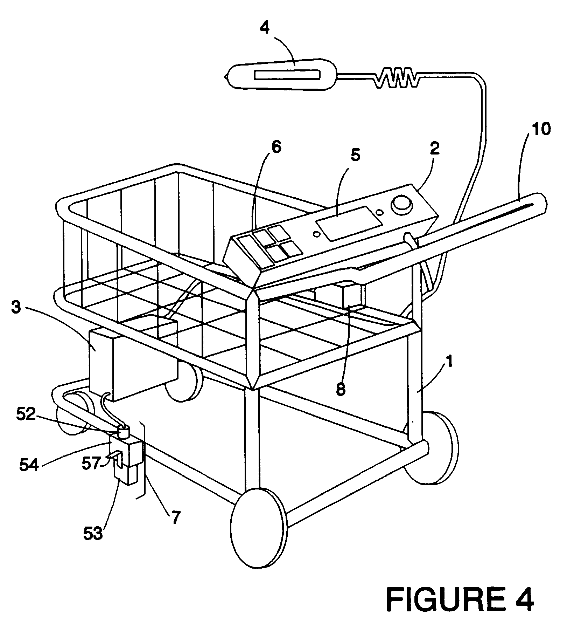

Figure 3 shows a shopping cart **1** including a shopper product information remote unit **2** and a shopper obtaining product information as taught by the present invention. As shown in figure 4, the key functional elements of the remote unit **2** include a single-board microcomputer with database memory **3**, a bar code scanner **4**, a display **5**, a keypad **6** for function control, a rapidly rechargeable battery power pack (located within the microcomputer **3**, and an external connection mechanism **7** through which the remote unit may be recharged, and a data input device **8** through which the database is updated when the remote unit **2** is not being used by a shopper. The remote unit **2** can include a rechargeable battery **9** which can be recharged through the external connection mechanism **7**.

Future legislated requirements or optional capabilities for product information to be displayed could be readily handled by the computer via reprogramming. For example, the remote units **2** could display information on sales tax, deposits, unit pricing for comparison shopping, etc., as well as package price. Additional product data, such as nutritional information, could be displayed and processed by the same units when it becomes available in the database and the units are reprogrammed to retrieve it.

The remote unit **2** can be packaged in a rugged, injection-molded polycarbonate case sealed against environmental hazards, such as spilled containers, and designed to be permanently attached to a shopping cart **1** at a point convenient for the customer, such as near the handle **10**. Since there might be a significant risk of expensive damage or theft for remote unit-equipped carts **1** outside the store, those carts **1** could be mechanically restricted to remain inside. Purchases removed from the cart **1** at the checkout station would be transferred, after bagging, to a different cart which could be taken to the store's parking area.

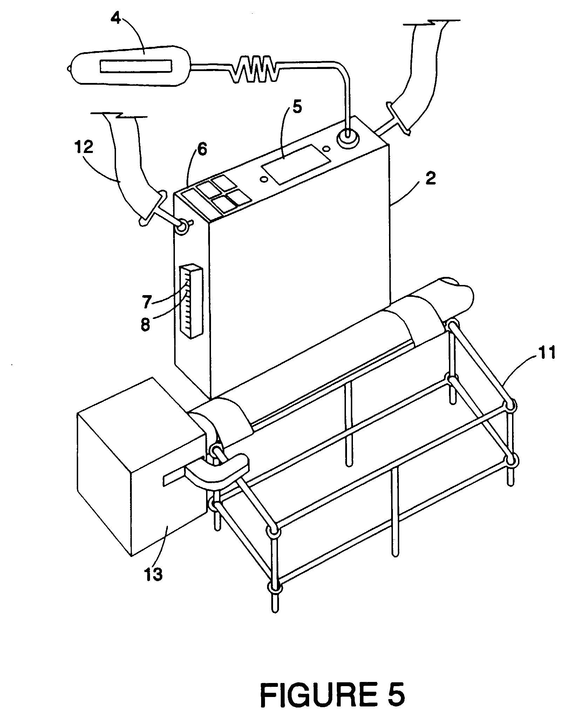

Figure 5 shows a shopping cart **1** which includes a remote unit **2** which can be latched to the side of a cart **1** when requested by the shopper. In this case the unit **2** would be retrieved from the cart 1 at the checkout station before the cart **1** were taken out of the store, eliminating the need for cart restrictions. The possibility of damage to the unit **2** if the customer or the checkout clerk should drop it and the greater potential for theft of the unit **2**, by itself easily concealed, makes the risk of loss for this embodiment greater than that if the unit **2** is permanently attached to the cart **1**.

A cart mounted holding rack **11** can be provided such that the unit **2** could be securely held on the side of the cart **1** during use. A carrying strap **12** is also shown, so the removable unit **2** could be carried by a shopper who just needs a few items. The strap **12** also helps reduce the chance of the unit **2** being dropped. Furthermore, the unit **2** could be locked into the holder **11** by a lock **13** and unlocked and removed by a cashier, thereby reducing the chance of theft. This lock could be either electronic or mechanical. If the lock were electronic, it could be deactivated by an IR device at the checkout counter so the cashier could remove it. The holder **11** could be collapsible such that the presence of unit **2** would hold it open, but after removal of the unit **2**, the holder could be collapsed and out of the way. If the holder **11** were provided on the side of the cart **1** the store could provide doors with rail systems such that the carts **1** with units **2** in the holders **11** would be too wide to exit, but carts **1** with collapsed holders **11** could pass through. If the store desired to allow the customers to be able to use the carts **1** outside the store, a central alarm system could be provided that took a roll call of the units **2** by a radio communication system.

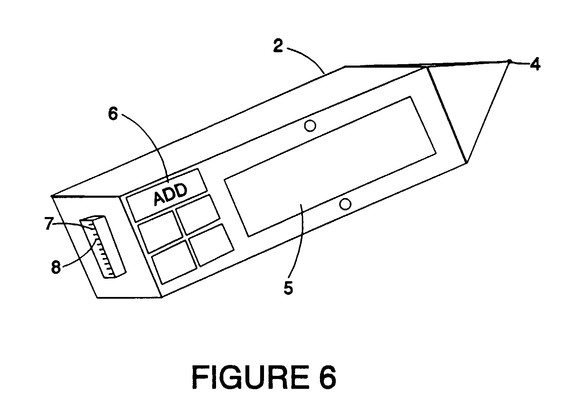

Figure 6 shows a shopper carried remote unit **2**. While the features would be physically much smaller in scale, the remote unit **2** would be similar to the other embodiments described hereinabove and the unit **2** would still include the data input device **8** as taught by the present invention. This type of unit **2** would be more convenient for the shopper, but the ease of theft is a major concern with this type of embodiment.

One difference in the configuration of the shopper carried units are the use of standard electrical connectors as the external connection mechanism **7** and data input device **8**. The connectors may provide a more reliable connection for data transfer. The intention for the shopper carried units **2** is that they be returned to the checkout clerk by the shopper. Shopper carried units **2**, although potentially much simpler to incorporate in the existing supermarket environment, would be much more susceptible to damage and theft than cart-mounted units **2**. The damage potential can be reduced by rugged packaging and careful handling by store personnel.

Possible embodiments of the components of the remote units **2** are described in detail below.

### Remote Units - bar code scanner

The bar code wand 4 can be selected from a variety of rugged commercial units which include the circuitry to read and translate the interleaved **2** of 5 UPC bar code independent of the microcomputer CPU **3**. While the UPC system is generally used, other systems of bar code identification are certainly within the scope of the present invention. The wand can signal the microcomputer CPU **3** that a new bar code has been read either automatically or via a button that the user presses just before reading the bar code. A sapphire tip on the wand **4** protects the internal light-sensitive elements from dirt and debris. The wand **4** is connected to the unit **2** through a strain-relieved coil cord such that the shopper can bring the wand tip in contact with the bar code on the product as it sits on the shelf. A spring loaded retraction mechanism could be provided such that the wand **4** would not be damaged if it was allowed to dangle from the unit **2**. A cord of six to eight feet should provide the shopper with adequate reach. Bringing the wand **4** to the product is believed to be superior to the alternate reading method whereby the product would be brought to a laser bar code scanner mounted in the remote unit case. Wireless hand mounted units as taught by Wakatsuki could also be used as scanning device **4** in the remote units **2**. However, such units are likely to create interference with similar bar code scanners used by other shoppers. In any event, all these methods of implementation of the teachings of the present invention are anticipated depending upon user preference.

### Remote Units - microcomputer

The single-board microcomputer **3** can be based on an 8-, 16- or 32-bit CPU (central processing unit) architecture and incorporates proven, readily available commercial hardware. Addressing capability will be adequate to handle up to 16 megabytes of on-board RAM (random access memory) in which the product information database will be stored. Memory storage can be provided by any technology (e.g. disk drive storage) that is adequate for the purposes described herein. It is estimated that the 16 megabyte capacity would provide ample memory for a typical supermarket application.

Although the database stored in the remote unit **2** will be detached from the master database in the supermarket's host computer **20**, it will be updated anytime the remote unit **2** is in its storage area, not being used by a shopper. Updating will be accomplished in a few seconds and will be performed an adequate number of times per day to insure that the remote unit's data is current with the host computer's data.

The normal practice is to change items prices when the store is either closed or most likely to have the least shoppers, which is typically between 12:00 and 4:00 am. However, there is still a possibility that the host's database is updated while some remote units **2** are being used by shoppers. This problem is resolved by associating a version number with each database version. The checkout counter can retrieve the shopper's database version from his or her unit **2**, and determine if there have been some changes, and inform the shopper of any such changes before the purchase is completed.

Additional hardware on the single-board microcomputer **3** includes a display driver and serial communications devices to handle both input from the bar code scanner **4** and database update inputs from the external connection mechanism **7**. A parallel communications device handles inputs from the keypad **6**, and it has the capability of handling outputs to peripheral devices, such as a 40-column printer, which may be incorporated in some embodiments of the remote unit **2**. An 8 kilobyte replaceable ROM (read only memory) should be adequate to store the unit operating program, however, as functions of the unit **2** expand appropriate modifications in hardware design are certainly anticipated.

Source programming for the pricing computer is effectively accomplished in Ada or Pascal programming language. These higher-level languages are ideal for the pricing-computer application because of the flexibility in the types of data structures they allow the programmers to define. There should be no difficulty adapting the operating program to handle a wide variety of pricing database structure already in use by various vendors.

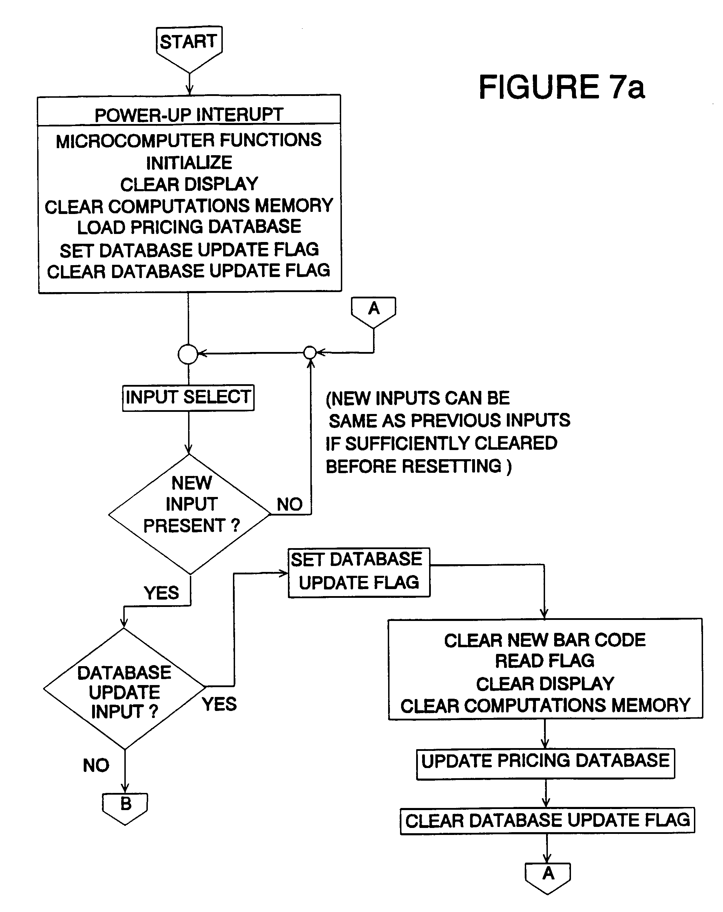

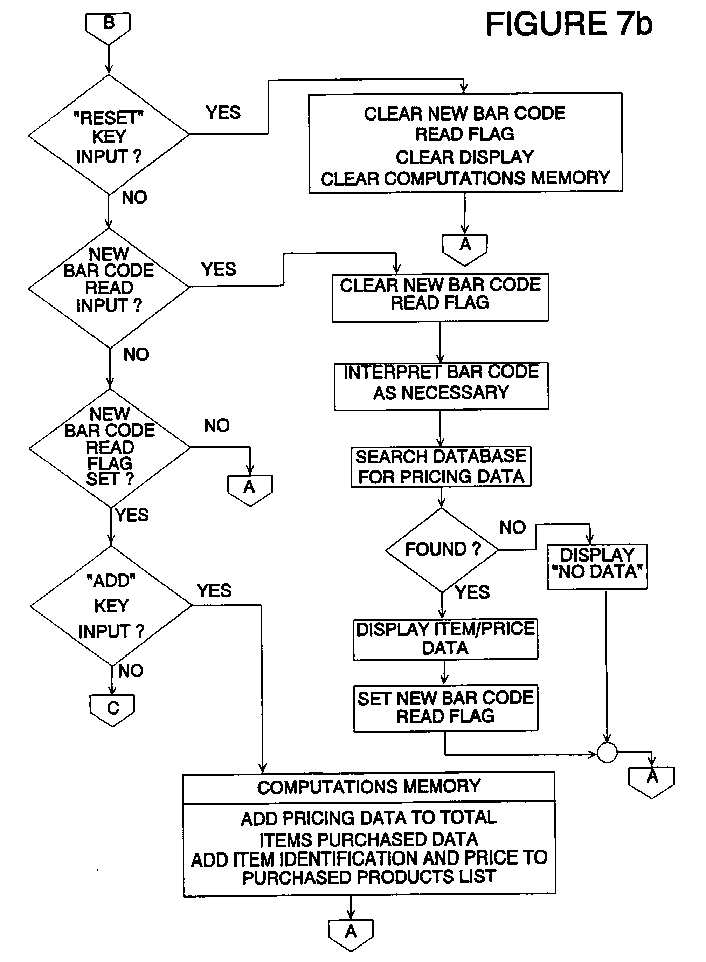

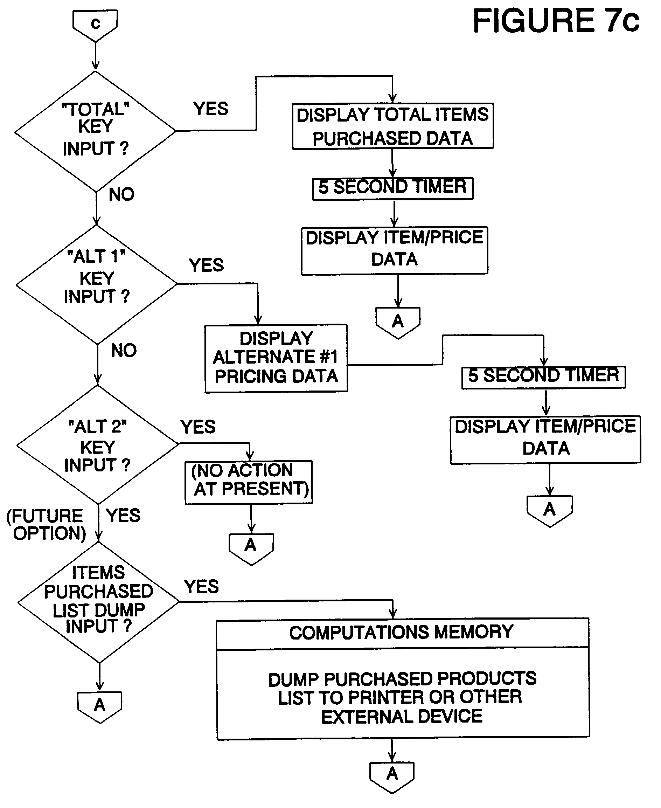

Figures 7a-7c show a series of flow charts for one possible remote unit operational program. As user-needs develop, new program operations will be developed by those skilled in the art. When the shopper first starts to use the remote unit **2** the operational flow of the program is initiated. Intermediate data storage, the results of computations associated with customer selected functions and a sequential record of the customers purchases are stored in the computations memory, a dedicated section of RAM, which is cleared and preset to zero when a new customer resets the program. A "DATABASE UPDATE FLAG" provides a signal for illuminating the database update indicator on the display panel when new data is incoming. A "NEW BAR CODE READ FLAG" is set only when valid product information has been retrieved from the on-board database. This protects the program from further action on non-existent data in case where data for the bar code read is not stored. The "DATABASE UPDATE INPUT" is derived from a signal via standard serial data connectors or via IR communications, and it causes the program to branch to a service routine for accepting a string of update information. The "ITEMS PURCHASES LIST DUMP INPUT" is a similar signal which causes the program to branch to a service routine that outputs a string of purchased products list data via either serial connection or IR transmission.

A power-up interrupt procedure begins which initialize's the microcomputer **3** functions, clears computations memory, clears the display **5**, set a database update flag, loads a pricing database and clears the database update flag. The unit **2** is then ready to receive input. If database update input is incoming then the database update flag is set and the new bar code read flag, the display and the computations memory are cleared. The remote unit **2** pricing database is updated and the database update flag is cleared. The unit **2** is then ready to receive new input (**A**).

If the new input is not database input (**B**), the "Reset" key is sampled. If the "Reset" key is pressed then the new bar code read flag, the display **5**, and the computations memory are all cleared, and the unit **2** ready to receive new input. If new bar code input is received the new bar code read flag is cleared, the bar code is interpreted as necessary and the database is searched for product information. The information is then displayed and the new bar code read flag is set. In the event that no data for the bar code is found in the database a "no data" message is displayed. When the new bar code flag is set, the "add" key is sampled. If the "Add" key is depressed the pricing data is added to the total items purchased data and the item identification and price is added to the purchased products list. If the "total" key is depressed (**C**), the total items purchased data is displayed for about five seconds. The "total" data after power-up interrupt or "reset" and before "add" is numerically zero. If the "Alt1" key is depressed the alternative #1 product information is displayed for about five seconds. Alternative #2 product information can be displayed as the use of the remote units expands.

### Remote Units - display

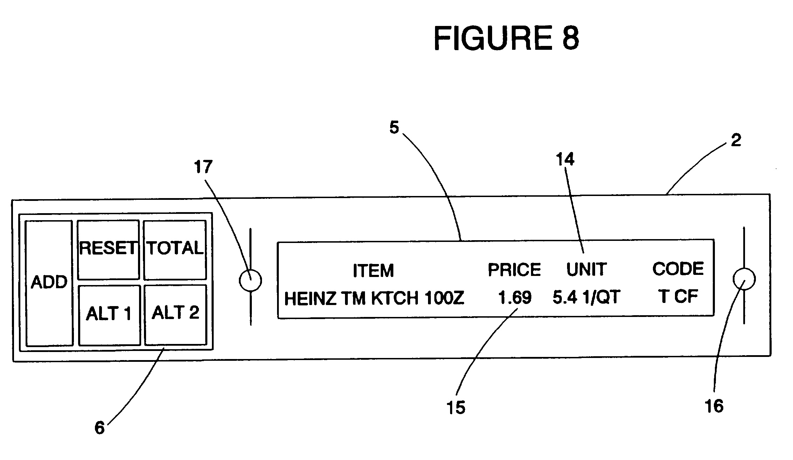

Figure 8 is a front view of the display on one embodiment of a remote unit **2** as taught by the present invention. The display **5** shown is a low-power LCD (liquid crystal display) data display **5**. The LCD display **5** is mounted inside the top of the unit **2** case and consists of two lines of up to forty characters each. The upper line **14** displays the identification of the data displayed below it, labels centered on their respective data fields. The lower line **15** displays the data in large **16** or **18** point characters such that the shopper can read them from a distance. By including the data labels **14** in the display, a virtually unlimited number of different display formats can be presented. A light level sensor **16** mounted in the unit **2** case near the display **5** detects low ambient light conditions and automatically turns on edge lighting for the display such that the shopper is still able to read it when entering a dark area of the store. A database update indicator **17** is provided to indicate that the database has been updated. While a small display **5** is shown, a larger display could be implemented that allowed for greater services to the customer such as video cooking instructions, graphic displays or product promotion.

### Remote Units - user-function control

As user-needs develop, the desired user function control will change with those needs. Described herein is one possible implementation of many possible user-function control systems. The membrane keypad **6** is mounted on the top of the unit **2** case near the LCD display **5** and is of a rugged sealed construction similar to that of membrane keypads used in industrial machine-tool controllers. The keys are comfortably large and have a feel that definitely indicates to the user that the key has been depressed. The keypad configuration in the embodiment of the unit **2** shown has five keys, one large key and four smaller keys, each half as tall as the large key, arranged in a square just to the right of the large key. Identification of the keys and the program functions correspond.

The small key in the upper left corner of the square is the "RESET" key. This key is pressed by the shopper when he or she first starts to use the remote unit **2**. Or, the reset would be done automatically when the unit **2** is placed in the central maintenance system. It clears memory sections where the results of computations, such as a running total of purchases, for the previous shopper have been stored. When a new bar code has been read, the LCD display **5** presents a product description of up to nineteen characters (c.g., "HEINZ TM KETCH 100Z"). This is followed on the same display **5** with a package price of up to seven characters (e.g., "1.69" or "2/2.99"). The package price is followed by a unit price of up to eight characters (e.g., "18.80/LB" or "5.41/QT"). Finally, the unit price is followed by a code of up to three characters indicating whether the product is taxable ("T"), requires a deposit on the container ("D") or is covered by a current discount coupon "C"). If the shopper wishes to see more information about tax, deposit or discount the small "ALT1" key in the lower left corner of the square should be pressed to present the first alternate data display. The tax without discount, deposit, discount and tax with discount for the package is presented, in order, across the display. After approximately five seconds the display reverts to the original display of product description, package price, etc.. If the shopper wishes to purchase the package the large "ADD" key should be pressed. This action causes the package price, tax, deposit and discount data to be added to running totals stored in the computer memory. The "ADD" key is the large key because it is used most often and generally can be reached from a distance while the shopper is using the other hand to place the package into the shopping cart. If the shopper wishes to review the current running totals the small "TOTAL" key in the upper right corner of the square should be pressed. This action causes the LCD display to present useful running totals. Up to five characters each of total taxes without discounts, total taxes with discounts, total package deposits and total discounts are presented in that order. This will be followed in the same display with up to six characters for each purchases with taxes deposits and total purchases with discounts, taxes and deposits. After approximately five seconds the display reverts to the original display of product description, package price, etc.. The small key in the lower right of the square is the "ALT2" key, which can be given function in alternative embodiments of the remote unit **2**. It is available to be used for calling up additional data displays as pricing databases are expanded. Because there are a large number of combinations of the "ALT1", "ALT2" and other keys which could be pressed simultaneously, the potential for expansion with the simple 5-key keypad **6** is excellent. Furthermore, the keypad could be enlarged to provide different interfaces with the users. For example, a key could be added to let the shopper delete an item if he or she changes his or her mind and decides not to purchase an item already selected for purchase. While a keypad **6** and a display **5** are shown separately, they could be combined into a touch screen display.

### Remote Units - electrical power supply

The remote unit **2** can include a rechargeable battery **9** which can be recharged through the external connection mechanism **7**. When the external connection mechanism **7** is connected to an low-voltage electrical power bus, the battery **9** would be recharged. This is done as the unit **2** is stored on a central maintenance system. The battery **9** is preferably a rapidly rechargeable Ni-Cad battery such that a minimum amount of time is necessary to recharge the battery **9** for use by a shopper.

### Remote Units - input device

Each of the remote units **2** taught by the present invention includes a data input device **8** through which the remote database memory can be updated when the unit is not being used by a shopper. The data input device communicates with the data update system through electrical connection in serial or parallel, or through other communication means such as infrared or radio transmitters and receivers. This is discussed in further detail in the description of the central maintenance system.

### Remote Units: 7) printer

The remote unit can also be used by the retail establishment clerks to identify product information errors on either shelf labels or in the information database. Error data could be stored, in the same manner as a shopper would when buying those particular items, and downloaded from these remote units **2**. Furthermore, with the addition of a printer on these units they could be used to print correct and updated shelf labels for placement throughout the store.

### Central Maintenance System

Storing the pricing database in each remote unit **2** allows it to operate independently of the host computer **20**, a critical design feature which is a practical necessity for the system to work effectively. A data update system **21** is provided which is capable of operatively connecting to the remote unit's data input device **8** and updating the remote units **2** with updated product information related to each product bar code, such that the remote unit **2** is removable from the update system **21** for use by the shopper, and is replaceable on the update system when not being used by the shopper so as to be updated with updated product information. The update system **21** is essential to the present invention, in that, it insures that the remote units are operatively connected to the host computer **20**, even though the host computer **20** and each remote unit **2** are not in constant physical connection. The update system **21** can be connected through electrical connection to a serial or parallel port in the remote unit **2**, or through other communication means such as infrared or radio transmitters and receivers. For example, all the units **2** in the staging area could be radiated by IR, modulated with data to be updated. The IR receivers in the units **2** could detect these signals and update the database. The communication function of the update system **21** is critical, not the exact means of data communication, as long as the update system **21** is provided with the same product price information as provided in the host computer **20**. Each system also includes means for supplying the update system **21** with updated product information, including product pricing information, such that the remote units are provided with the same updated product pricing information as provided at the bar code scanners at the cashier's counters.

The product pricing information could be time stamped such that at a specified time, midnight for example, the price would change. So the remote unit might receive a new price at 3:00 in the afternoon but would display the old price until midnight at which time the price would change. A signal could be provided to the shopper as a warning that a price of a previously recorded item has changed, or the system could keep the old price for any products recorded in the system prior to the price change. This would be a decision made by the individual retail establishment.

The means for supplying the update system **21** with product information can be provided by an intermediate computer and a host system interface between the intermediate computer and the host computer **20**. A readily available IBM Personal Computer clone could be used for this purpose to reduce the difficulties of integrating the remote units **2** and the store's existing host computer **20**. The host computer **20** could call up the intermediate computer **22** and provide the database to be updated on a convenient periodic schedule, or whenever necessary. Then the intermediate computer would perform the functions of modifying the database format, if needed, and continuously updating the remote-unit database memories, independent of the host computer's operation. It is anticipated that as the product information system develops, the means for supplying the update system with updated product information could be incorporated within the host computer operations, as opposed to an intermediate computer.

An alternate design, whereby each shopper's computer directly accesses a common database stored in a central computer, invokes numerous communications problems. Because the pricing computers must be capable of being freely carried to all areas of the supermarket floor, the only practical means of remote communication would be via RF (radio) or IR (infrared) using fixed transmitting/receiving equipment in the ceiling or the floor of the supermarket. Each remote unit would have to operate on a different frequency to avoid interference with other units being operated simultaneously. Furthermore, the systems would be susceptible to interference from other typical supermarket noise sources such as fluorescent lighting, microwave shrinkwrappers and large refrigeration equipment compressor motors. The cost of equipping the store building and each pricing computer with reliably interference free, Federal Communication Commission approved communications hardware might make the system economically unacceptable.

On the other hand, the use of IR (infrared) communications techniques could be practical for particular unit **2** functions performed in specially, shielded and localized areas. For example, a group of units **2** located in a special temporary storage, or "staging", area, between customer usages could use localized IR to blanket transmit database updates to IR receivers in the units **2**.

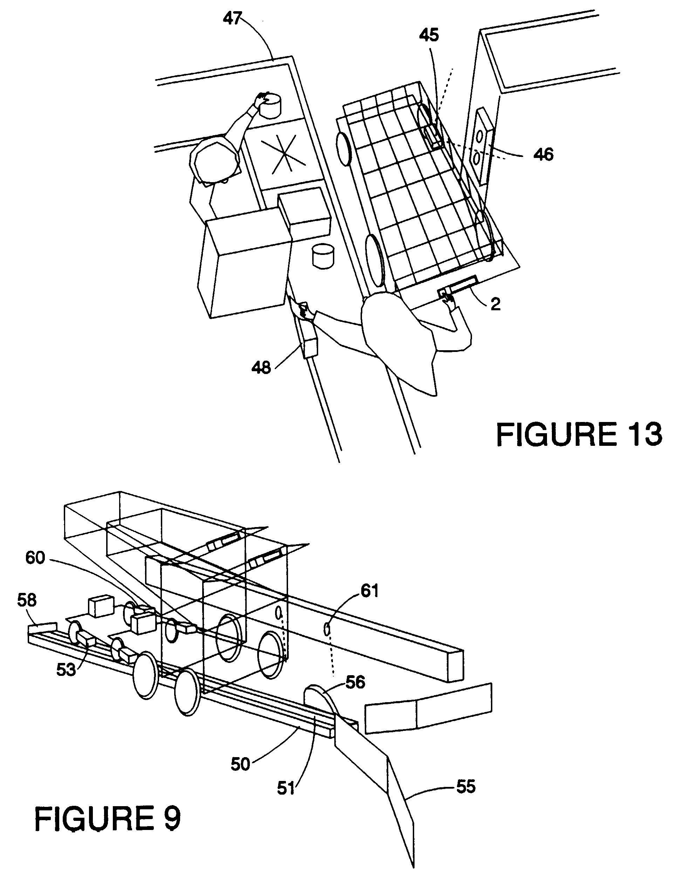

The maintenance system may include a staging area on the supermarket floor where groups of carts, one inside another, and equipped with remote units are placed, or it may be an automated vending machine which distributes hand-held remote units to shoppers. When the shopping cart **1** and its remote unit **2** are not being used by a supermarket customer, the cart **1** will be stored along with other carts in a staging area, similar to the cart storage method used by supermarkets today. Figure 9 is a perspective view of a shopping cart including a remote unit in a shopping cart staging area as taught by the present invention.

While in the staging area, the battery inside the remote units is recharged through an external connection mechanism which is connected to an electrical power bus. Also, while in the staging area, the product information database updating function for updating the product information stored in the memory of the remote units could also be performed.

The staging area could be equipped with floor rails **50** containing parallel electrical contact strips **51** through which power for recharging the batteries **9** and data for updating the pricing database in the computer **3** memory can be transferred to an external connection mechanism **7** on the shopping cart **1**. The mechanism **7** is mounted on the lower frame of the cart **1** and connccted to the unit **2** via a cable **52**. The active element of the mechanism **7** is a spring-loaded electrical conductor **53** that interfaces with the geometry of the contact strips **51** in the floor rail **50** and slides smoothly along the rail **50** when the cart is properly aligned with the rail **50**.

The conductor in the mechanism **7** is raised up against its spring and surrounded by a housing **54** that protects it from dirt and debris when the cart **1** is being used by a shopper. As a cart **1** or group of carts **1** inside each other are wheeled toward the staging area, additional guide rails **55** on the floor funnel the carts into alignment with the contact strip floor rail **50**. A cam **56** fixed to the floor releases a detente pin in the mechanism **7** on the cart as the cart passes over it, allowing the conductor **53** in the mechanism **7** to move down and mesh with the rail **50**. The spring force behind the mechanism **7** keeps it in good electrical contact with the rail **50**. Carts **1** are removed from the staging area on a first-in first-out basis. A foot pedal **57** mounted on the mechanism housing is depressed to raise the mechanism's conductor **53** back up into its housing **54** where the spring-loaded detente pin retains it. A block **58** at the end of the floor rail **50** prevents carts **1** from being wheeled past the end of the rail **50** until the mechanism conductor **53** has been raised.

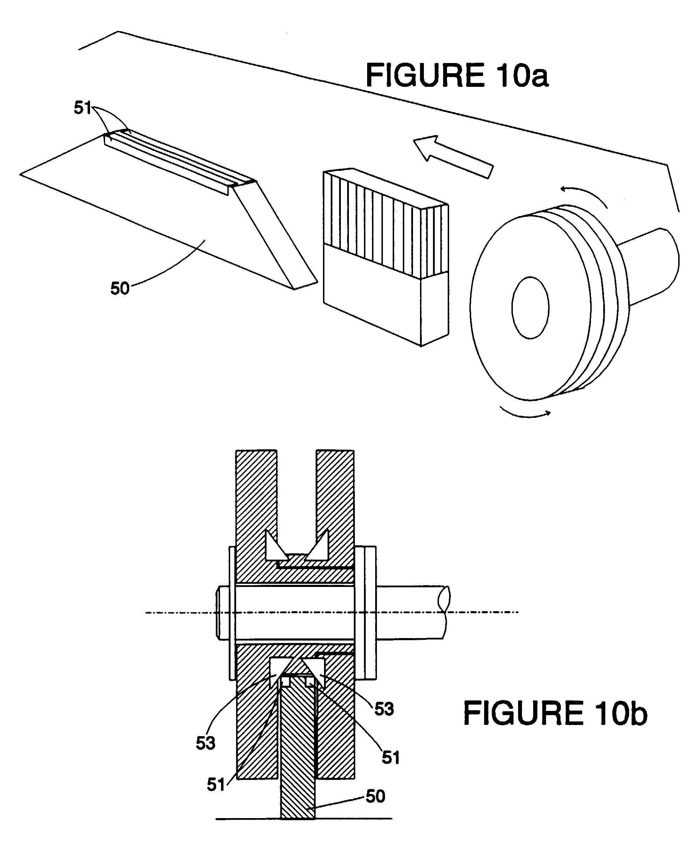

An alternate and preferred battery recharging mechanism includes one where the charging conductors **53** could be provided within the wheels of the cart **1**, as shown in figures 10a and 10b. The cart **1** would be pushed up onto the rail **50** such that the conductor **53** made a good connection with the rail **50**. The rail **50** is high enough such that the wheel would ride on the rail **50** as opposed to the floor. The weight of the cart **1** would insure the positive connection between the connector **53** and the rail **50**.

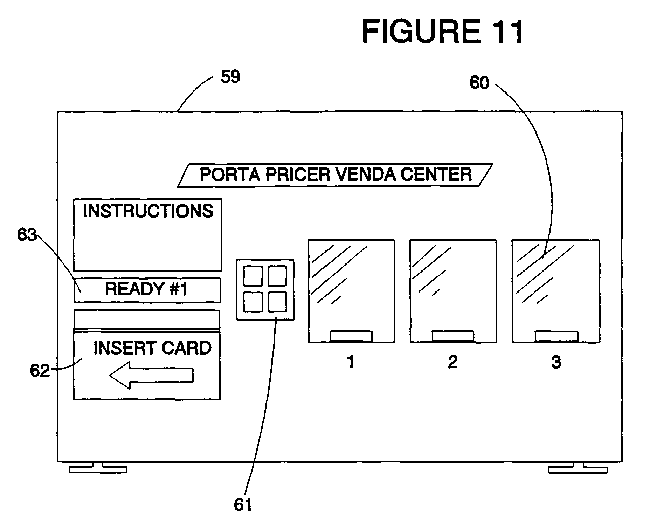

Figure 11 is a front view of a staging area **59** for portable remote shopper carried units. The shopper carried unit would be stored within the dispensing doors **60**. The units **2** are connected to the data update system when they are stored in the staging area **59**. The shopper would punch in an identification number through a keypad **61** and/or slide an identification card through an ID card reader **62** before a remote unit would be allowed to be removed. An appropriate gate will automatically open, allowing the customer to pick up only one remote unit **2**. Such techniques have been widely used in the vending machine industry. By this technique, the customer would assume responsibility for the loaned unit **2**. When the unit **2** is returned at the checkout station, the customer's name, and responsibility, would be cleared from the record of units outstanding. A large number of units **2** can be stored in several parallel racks in the staging area **59**. Because dispensing to the customer is automated, the only labor required by supermarket personnel to keep the system going is to periodically bring the returned units from the checkout stations back to the staging area **59**. And even this could be automated.

Because good uninterrupted mechanical contact is necessary to insure error-free transmission of data through an electrical contact, the alternate use of blanket IR or RF transmissions of data to the remote units **2** in either type of staging area is preferred for greater reliability. As shown in figure 9, an IR receiver **70** can be included within the remote unit **2** such that IR signals from an IR transmitter **71** can be received. The IR transmitters **71** are connected to the main system bus and the IR receivers **70** would function as the data input device **8**.

### Checkout Counter

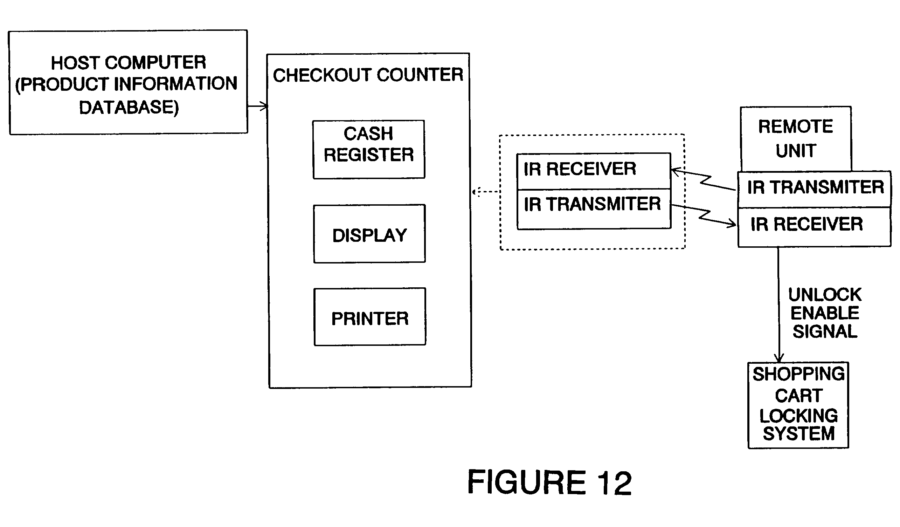

The shopper can keep track of the products placed in the cart on the remote unit **2** until he or she has reached the cashier's counter. At the cashier's counter the products to be purchased will be scanned by the cashier's scanner and totaled. It is possible that there will be a discrepancy between the cashier's total and the remote unit's total. The most likely cause for this discrepancy within the present system is user error, i.e. a product was added twice or was not included in the total. In some embodiments of the present invention the product information system may include a remote unit interface for the bar code scanner at the cashier's counter, as shown in the block diagram of figure 12. The running total of products information stored in the remote unit can be compared to information totaled at the bar code scanner at the cashier's counter and the discrepancies identified. This interface could be provided by an electrical connection or an IR or RF communication interface.

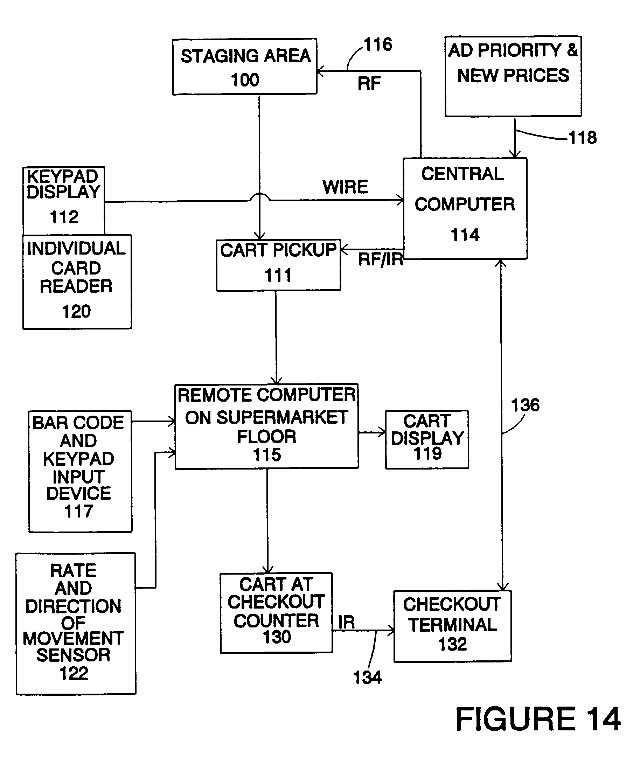

Figure 13 is a perspective view of a shopper using an interface between the remote unit computer and the cashier's scanner computer to compare the shopper's list of product's purchased and the cashier's list of products purchased. The remote unit **2** includes an IR transmitter **45** which transmits signals to an IR receiver **46** which is connected to the checkout counter's computer **47**. The product list and information (i.e. nutritional information) could be printed out on a printer **48**. While a printer could be included in the remote unit **2**, the advantage of including the printer **48** at the checkout counter computer **47** is the lack of excessive printouts and littering throughout the store. While an IR interface is shown, many other types of communications interfaces can be used as long as the communication between the remote unit **2** and the cashier's counter computer **47** is accomplished.

### Security

Since these shopper units are expected to be a valuable item, it is desirable that these units do not go out the retail establishment in an unauthorized manner. Security measures to discourage theft of the remote units could include mechanical restrictions on carts, to which remote units are attached, to prevent the carts from being taken out of the store. Or, as a courtesy to shoppers, the mechanical restrictions on the carts could be removed at supermarket checkout stations when a key component of the remote units was removed from the temporary storage rack on the cart. Also, a magnetic strip molded into the case of the remote unit could be provided to set off an alarm if the remote unit were to pass through a strip sensor at the exits of the supermarket. In addition, security can be enhanced by requiring the customer to register his name and personal information when borrowing a remote unit. A customer's credit card, check-cashing card or similar card with a standard magnetic data strip would be inserted in a center maintenance system card reader and the shopper's data entered into a temporary loan file in the intermediate computer before the customer could take a unit from the central maintenance system.

The distribution of hand held units is limited to only authorized shoppers who sign out for them. The sign out could be automated by the used of a card issued permanently to that shopper by the store, such as a check cashing card. The sign-in could be registered at the checkout counter by the sales clerk. The automated use of credit cards for sign-out is well known to those skilled in the art. Furthermore, a vending machine could be provided where the portable shopper units are stacked and then individually delivered to each shopper upon the insertion of an appropriate card issued by the retail establishment. Furthermore, the functions of the data update and battery recharging of the remote units is also integrated in the vending machine. Coin operated systems for dispersal of carts have been widely used in airports. These cart dispersal systems could be easily modified to dispense cart mounted units as taught by the present invention.

There may be several shoppers who do not have enough credit history with that retail establishment and therefore cannot be entrusted with the hand held units. Such shoppers can be provided with the shopping cart mounted units and the shopping carts could be restricted from leaving the retail establishment through the use of posts around the retail establishment. Such use of posts to prevent the removal of shopping carts from the retail store is quite well known and wide spread. However, some customers may still desire the convenience of taking the cart out to the car in the parking lot for unloading their groceries. So one may use two different size shopping carts. Carts containing the shopper units can be larger sized and physically prevented from going out through the guard posts. The merchandise could be transferred from the larger carts to smaller carts, without the remote units, after bagging. The guard post size would be such that it allows these smaller sized carts out into the parking lots. This approach, however, has an undesirable effect of transferring merchandise from one cart to the other. Another approach taught by the present invention includes the use of the housing of the shopper's unit and its fastening to a shopping cart. As a preferred embodiment, the present invention teaches that the physical housing of the shopper's units are fastened to the shopping cart in such a way that the net effect is increasing the physical size of the shopping cart which can not physically pass through the guard posts. The shopper's unit is removed from the shopping cart and the holder collapsed, to allow the shopping cart to be taken to the shopping area, instead of transferring the merchandise into a different cart.

Electronic means, IR or RF, could be provided to unlatch the shopper's unit from the cart. The unlatching signals could be complex and encrypted such that the removal of the shopper's computer from the shopping cart could only be performed by the agents of the retail establishment. The use of RF signals to physically latch garage doors has been in public use for several decades. The use of encryption technology using some sort of public key to code the unlatching signals can easily be implemented by those skilled in the art. The use of encryption in unlatching signals provide the safety from those who can monitor the unlatching signals for a while and use them to unlatch the shoppers unit from the cart and walk away with it.

The retrieval function of the remote unit could be integrated with each of the existing checkout counters or by forming a separate checkout counter means for unit retrieval. The remote unit is retrieved from the shopper by the clerk at the checkout counter and returned to the central maintenance system for updating and recharging. If the customer has used a magnetic-strip identification card to obtain a remote unit at the staging area, he or she may remove his or her name and data from the load file in the temporary database by passing his or her card through a checkout card reader after the remote unit has been returned. After the unit is received from the shopping cart, it is secured on the another cart and sent on the staging area for maintenance, including data update and recharge.

The theft potential could further be reduced by a combination of magnetic security strips molded into the computer case and controlled distribution of the units to the customer. Commercially available magnetic security strips similar to those used on books in public libraries have no effect on the computer's volatile memory and are effective for up to twenty years. The store would have to install appropriate detectors in the store doorways to implement this system, but, once installed, the detectors could be used to curb theft of other items as well as the pricing computers.

### Security - central alarm system

Some store owners might want to let the customers take the shopping carts out into the parking lots. A system to protect the carts from being stolen or vandalized in such cases is described below. Each remote unit and the central maintenance system would include a radio transmitter and receiver. A central alarm system including the radio transmitter and receiver connected to the central maintenance system takes the roll call, over the radio, of each shopping cart. Each shopping cart responds to transmitting a message back to the system indicating their presence within the field of the radio coverage.

This roll call is taken very frequently, for example, every second or so, so that if a cart is removed from the coverage of the field, the central system will issue an alarm indicating the removal of the cart from it's "field of view". It must be noted that the shopping cart will also not be able to respond if the shopping cart becomes inoperational for any reason whatsoever - a condition which also calls for management's attention.

The field of the radio coverage could be limited by properly designing the power and the sensitivity levels of the transmitters and the receivers and their antenna patterns. Furthermore, different sets of central alarm system receivers could be used to cover the field inside the store and outside in the parting lot. A reception in those receivers will not only indicate the presence of the cart in the overall field of view but, will also indicate as to the general area where the cart is, such as inside the store or outside in the parking lot. A history of the signal strength from different receivers is kept in memory and adaptive threshold logic designed to indicate the presence or absence of the cart within the area. The response message from the transponder in each of the shopping cart may be coded that varies with time in a way that a decoy transponder may not be able to duplicate. An implementation of this and the transmitter-receiver system to indicate the presence of the cart in the vicinity will be obvious to anyone skilled in the art.

For example, the central system transmits a number corresponding to the serial number of the cart. All carts are questioned by the central radio in a sequence in a similar manner. All the carts receive the message but only on e cart bearing that serial number is supposed to respond. The shopping cart responds by sending a sequential number, i.c. 1 for the first time, 2 for the second time..., going on to the largest number representable by the bit length of the response message and then recycling back to 1, and so on. The computers in the two systems -- shopping cart and the central alarm system, keep track of the expected response number. The response numbers transmitted by the cart can be coded using an encryption key that is known by the cart computer and central computer only. This is to protect against the possible correct response from a decoy transponder. Since the encrypted numbers responded by the cart will look to be of random nature to an intruder, the decoy system will not be able to come up with the correct response. Of course, the encrypting keys on the shopping carts can be changed during the time the product information data base is being updated in the central maintenance area.

The central alarm system might like to make a number of tries to call the shopping cart before issuing an alarm to reduce the number of false alarms. For example, the system may be designed so that alarm is issued only if the cart does not respond even after three tries. The false alarm rate after three misses will be less than that with those issuing alarms after only the first missed response.

### Product Information Promotion System

One of the ways that the current system can be used to the benefit of the store is through a product information promotion system. This would allow product manufacturers and stores to more effectively advertise and evaluated customer response. Referring now to Figure 14, there is shown a block diagram of subsystems of the invention. A plurality of computerized PISYS shopping carts is normally located in a staging area 100. Each cart includes a bar code scanner and a display for presenting product information and advertising. Self-contained artificial intelligence software resides in a processor disposed in each cart. For purposes of this discussion, the terms "cart" and "shopping cart" refer to the physical cart maneuvered through supermarket aisles, as well as the processor, display and bar code reader associated therewith.

Each of the one or more PISYS staging areas 100, located either within the store or outside in a nearby parking lot, includes data transmission equipment for communicating with PISYS shopping carts docked within it and means for recharging the carts. Also provided in or near the staging area 100 is a magnetic card reader 120 with keypad/display 112.

An in-house central computer 114 is provided to maintain advertising and product information and to transfer such information continuously to carts in the staging area 100 via RF link 116. New or changed products and/or prices, as well as priority of advertisements, can be entered directly into central computer 114 via signal line 118, which represents a keyboard, modem, disk drive or any other suitable mechanism that can input data into a computer from a local or a remote location. Central computer 114 also maintains specialized databases for storing shopper interactions with individually computerized shopping carts. Central computer 114 also maintains time-of-day information used to synchronize shopping cart time. A valuable feature of central computer 114 is its capacity to store and execute artificial intelligence programs that analyze shopper demography and buying patterns, as described in greater detail hereinbelow.

Check-out counters 130 are provided with check-out terminals 132 which communicate with shopping carts over IR link 134 to download shopping cart logs (representing each shopper's trip through the store) to central computer 114 via suitable bidirectional communications link 136.

In operation, when a shopping cart is not in use, either store personnel or the shopper returns it to the staging area 100, where a charger maintains its battery condition. The staging area 100 also broadcasts the most recent product information and advertising data to the shopping carts docked within it, ensuring that all carts have current information. Time-stamp information from the in-house central computer 114 is also provided to the cart processor, ensuring that all shopping carts remain synchronized and providing an easy way to change from standard to daylight savings time and back again.

A shopper removes a shopping cart from staging area 100, as a first step 111. A shopper may manually enter a name or ID number through staging area keypad 112, or may use a magnetic check cashing card (sometimes called a "store club card") containing a personal identification code, by passing it through a card reader 120, which identifies the shopper to the in-house central computer 114. (Alternative mechanisms for identifying shoppers include voice recognition systems, fingerprint analyzers and signature recognition systems.) Card reader 120 resides proximate the staging area 100. In both cases, the in-house central computer 114 responds by RF/IR signal 116, sending the shopper's preference and purchase profile (PPP) characterizing the shopper's tastes and purchase patterns to the individual shopping cart computer database, not shown. If the shopper does not use a magnetic card and does not make a manual ID entry, the cart uses a default PPP.

Once the cart leaves the staging area 100, step 111, it disconnects from the staging area's battery charger. When the shopping cart is then with the shopper on the store floor, step 115, it contains everything it needs to interact with the shopper. Bar codes are read by a suitable device 117, such as one of the commercially available bar code readers. A cart display 119 presents product information and advertising. A touchscreen or keypad mechanism 117 allows manual key entry suitable for selecting items presented in menus on the cart's display 119. Alternative entry systems include key systems installed for convenience on the cart's push bar, or, as technology evolves, voice recognition systems. Practical display implementations include monochrome or color liquid crystal displays (LCDs). Such a display 119 is a practical means for presenting audiovisual advertising and prompting the shopper. A small audio amplifier and speaker provide a parallel method for presenting advertising copy and product information. The graphic display 119 has higher resolution than simpler character-based displays, allowing it to present continuous tone images (i.e., video images). The shopping cart also has a rate-of-movement sensor 122, which indicates how fast the cart is moving and a time-of-day clock, not shown. All operations are logged.

The heart of the inventive system is the intelligent software residing in the cart processor for monitoring the shopper's inputs. This AI software interacts with the shopper PPP loaded earlier to display product alternatives and advertising which best suit the shopper's buying patterns.

The system software logs all bar code scan activity, regardless of whether the shopper purchases a scanned item. (The interest which the shopper expresses by scanning even an item left unpurchased provides a measure of the effectiveness of product packaging, shelf location or nearby printed advertising.) When the shopper decides to purchase a product, he enters the product into the shopping list via keypad entry and the system updates the list of purchased items and total costs. It also generates subtotals by product class and tallies nutritional information associated with edible products. The system software also maintains time-stamped logs of its interactions with the shopper, and updates the shopper's PPP to reflect new or more accurate knowledge about the shopper's buying patterns.

Upon check-out, step 130, the shopping cart transmits all shopping session data via link 134 to the check-out terminal 132 or other device of the checkout counter. The cash register system may compare the list and prices of purchased items logged in the shopping cart computer to resolve any dispute between the customer and checkout clerk. All shopping cart shopping session data eventually passes to the in-house central computer 114 via link 136 for analysis.

The in-house central computer 114 updates its copy of each shopper PPP returned from the check-out counter 130. It also merges the shopping cart's logs with existing databases, developing the basis for further examination of generalized buying patterns. These are useful for determining the effectiveness of changes in product packaging and placement, as well as shopper response to poster advertising or other aspects of the store's floor layout. The in-house central computer 114 also tracks the effectiveness of each advertisement, which may affect the advertising rates billed back to vendors who pay for it.

The components within each subsystem appear in Table 1, and a summary of the operations which each subsystem performs appears in Table 2.

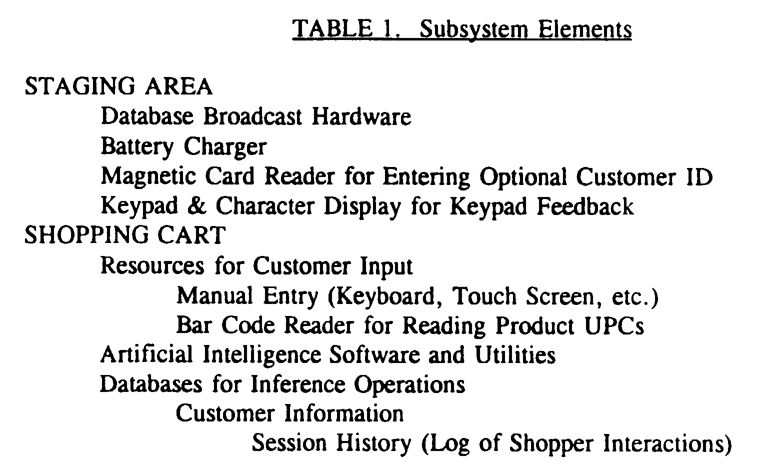

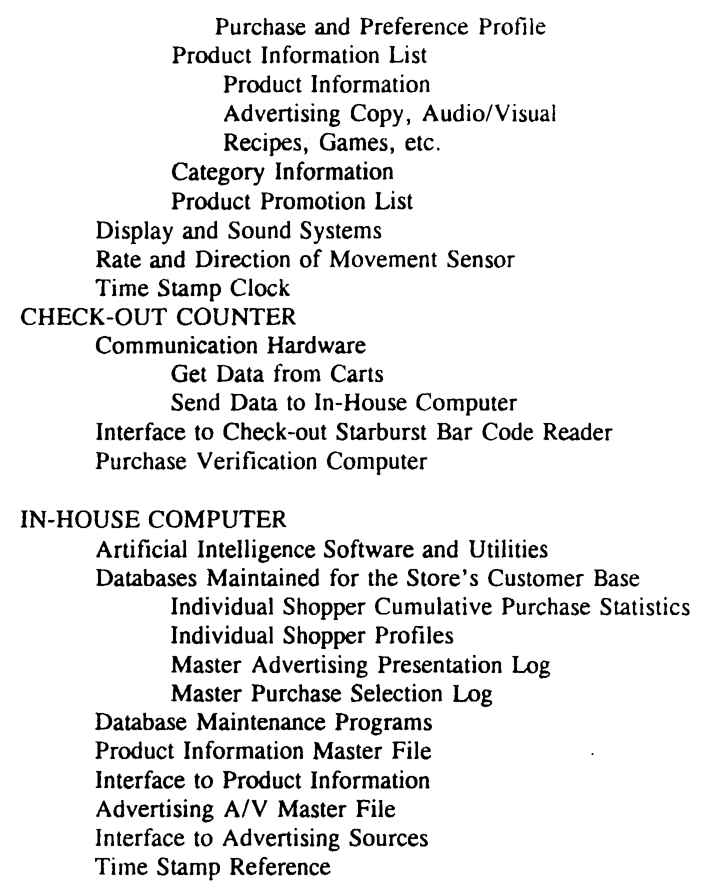

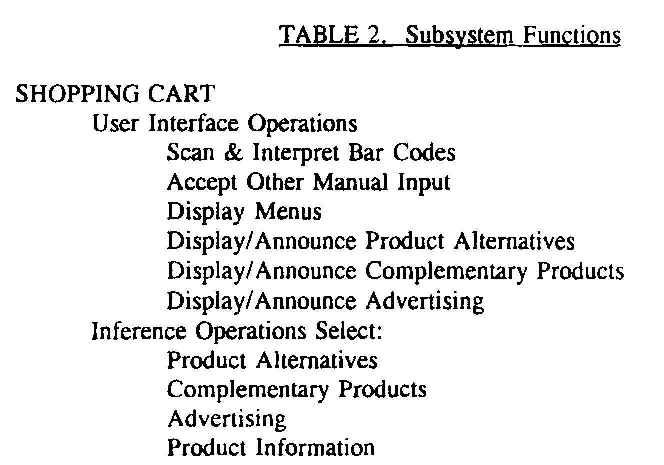

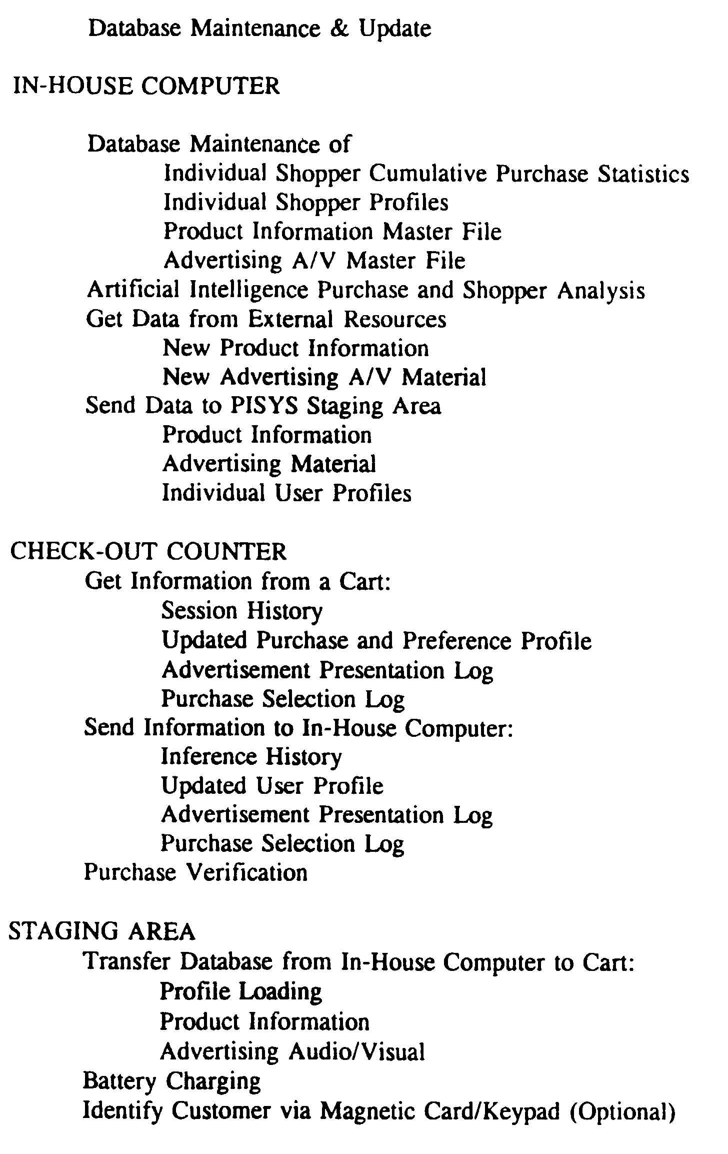

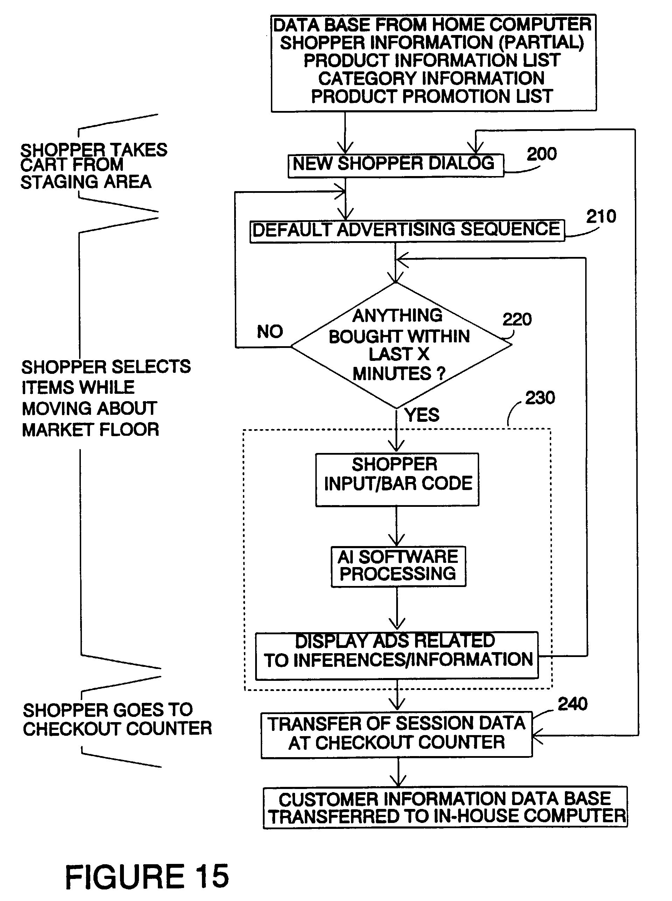

Referring now also to Figure 15, there is shown a flow chart of shopping cart/shopper interactions. The shopping cart computer incorporates AI inference engine software using rule-based artificial intelligence to select items to be presented to the shopper. The inference engine uses several main database structures: (a) shopper information, (b) product information list, (c) category information, and (d) product promotion list.

Shopper information includes the shopper's preference and purchase profile. The shopper information data structure includes logs of all shopper activity during a single shopping trip.

The product information list describes each product in the store and includes audio/visual representations of advertising material, maintained in compressed form to reduce local data storage requirements. These multimedia structures are allowed to change at preset times of day, allowing the carts to simultaneously change advertising presentations and pricing throughout the day without being returned to the staging area 100 (Figure 14) to be updated.

Category information indicates relationships between different groups of products.

The product promotion list indicates the promotional strategy to be used with each advertised product.

Provided in the cart processor for the AI inference engine could be a rule based system, which is responsible for characterizing the system's interpretation of customer inputs and controlling presentation of product information and advertising to the shopper. "Rules", as the term is used herein, constitute a wide variety of approaches, from rudimentary look-up tables of examples to intelligent, sophisticated, adaptive inferential neural networks or any other selection strategy or rule. The system intelligently provides the most appropriate information and paid advertisements, or, alternatively, information that is advantageous to the store. It might suggest complementary products as well (e.g., mustard for the hot dogs). Although the inference engine provides a default sequence for any situation which is incompletely specified, its usual operation relies on specific interactions with the shopper. The artificial intelligence software also maintains the databases, paying particular attention to the structures which characterize the shopper's habits and interests.

The "New Shopper Dialogue", step 200, may be as simple as the user entering a name or passing a magnetic store club card through reader 120 (Figure 14), but it also allows a new shopper to enter items such as whether the shopper uses food stamps, is a vegetarian, or is on a restricted diet. The shopper also may select a language for the display that is different from the one dominant in a multilingual society. The shopper also may enter a shopping list, expressing the items sought during the ensuing trip through the supermarket. The information learned here and through subsequent interactions is stored for later use by shopping cart artificial intelligence software, which uses the data to make decisions about which advertising and product information displays are most appropriate. Some of the information is applied to the preference and purchase profile which characterizes each shopper's individual tastes and buying habits.

When the New Shopper Dialogue is complete, step 200, the shopping cart displays a "Default Advertising Sequence", step 210, until the shopper enters a first input. This is a series of advertisements, presented several seconds apart. Advertisements presented in the sequence depend on shopper attributes that have been entered earlier or inferred.

The system includes a watchdog timer, not shown, which is reset each time a product's UPC code is scanned or the keyboard 117 is used. If no shopping or selecting activity occurs within a predetermined amount of time (e.g., ten minutes), step 220, the Default Advertising Sequence continues.

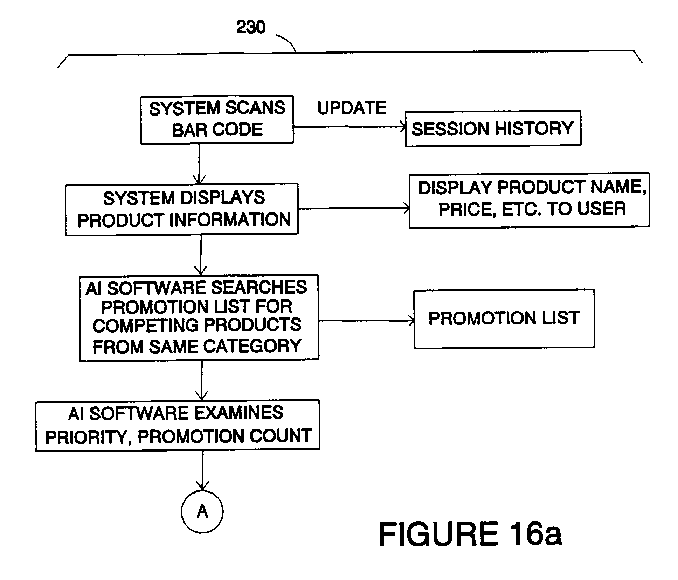

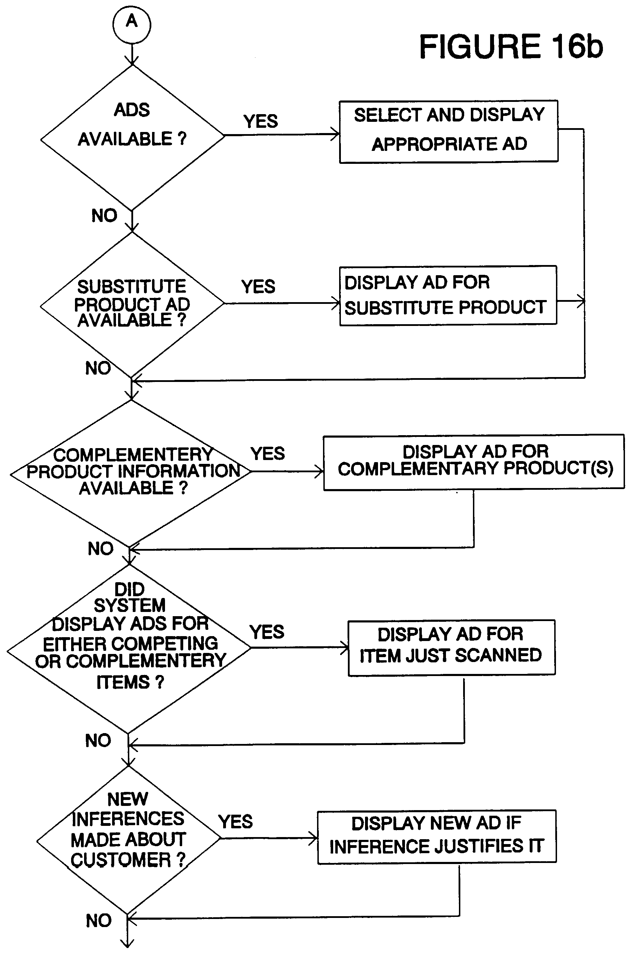

"Shopper Input", step 230, can interrupt the Default Advertising Sequence at any time. A detailed description of system operations from shopper input to display of appropriate message(s), step 230, is shown in Figure 16, which should be referred to in conjunction with Figure 15 at this point. Shopper input may be the scan of an item's bar code or a selection from a nested menu system. A few of many possible menu choices includes:
Locating an item in the store;
Finding the total of the purchases made;
Reviewing the list of purchases;
Selecting or de-selecting an item for purchase;
Requesting related recipes or dietary information; and
Redisplaying the last advertisement.

The system software uses four major databases to respond to the shopper's needs, as shown below.

The shopper information database includes a complete time-stamped record of all shopper interactions with the shopping cart, accompanied by shopper attributes learned or inferred from the interactions. The two important information structures within each shopper information record are session history and the preference and purchase profile (PPP).

The session history field stores user interactions as they occur. Included in this time-stamped history are all bar code readings, every menu selection, user query, user response, purchases selected or de-selected, advertisements or product information displayed, and the shopper's path through the store, as indicated by items which were scanned and assisted by cart location signals, if available.

This information allows the central computer 114 to intelligently analyze the shopper's actions during the shopping session. This information is stored and combined with information from other shoppers to make improvements in both the store and the program's performances. The shopper's purchases may be reconstructed quickly from this list as needed, but a separate PURCHASES list might be maintained for program efficiency.

The second major field of this record is the shopper's preference and purchase profile, values for which were either established at some point by the shopper or inferred during program execution. Examples of shopper-supplied values include language choice for display (e.g., Spanish, French), food stamp user, gourmet shopper, international shopper, coupon user, vision- or hearing-impaired (changes the size of displays and level of audio), special diet, and store club member.

Some of these fields have subcategories. For example, the "international shopper" field includes a specification of a country or countries of interest, and the "special diet" field indicates that the shopper is vegetarian, needs a low- salt or sugar diet, has allergies to specific foodstuffs, or desires kosher foods. These values might be indicated through the "New Shopper Dialogue" menu selection, step 200 (Figure 15). They also may be specified when the shopper fills out and submits a form to obtain a store club card. In either case, the information eventually passes to the in-house central computer database which maintains individual shopper PPPs. When engaging in a New Shopper Dialogue during a later shopping trip, the shopper need only identify himself with the store club card or an ID code, and the staging area 100 (Figure 14) will load the shopper's PPP into the shopping cart automatically, as indicated earlier.

The PPP passed to the shopping cart also includes a set of values which the system develops and maintains during shopping activity. Some possible characterizations include date, time and length of shopping session, average rate of travel when in motion, percentage of time when cart is motionless (i.e., when the customer is likely to be examining products), average shelf dwell time (i.e., the average time that the shopper is standing still before a shelf), shelf dwells per unit time, percentage of shelf dwells which result in a scan, average cost of a scanned item, average cost of scanned items which were purchased, price sensitivity index, purchase distribution statistics, representing the proportion of each class of products the shopper scans or scans, and buys, and measures of the shopper's response to different types of advertising. The advertising might take the form(s) of visual presentations (character-based advertising vs. graphics), audio advertising, advertisement vs. a neutral list of product alternatives, or a presentation of complementary products.

These values provide useful ways to characterize the shopper. A shopper who is moving very quickly but erratically through the store may be unfamiliar with its layout and might appreciate an offer of help to find something. Another individual who moves fairly slowly between relatively long periods of motionlessness might be examining products closely but not using the system, and the system may respond in a way which involves the shopper. Shopper characterizations also provide a way to ascertain when someone other than the owner of the store club card uses it to gain access to PISYS. For example, when a spouse borrows the card, the program takes such attribute into account when selecting information and advertisement for presentation to the shopper.

The product information list is the basic database of products in the store. Some fields within the product information list are not accessible to the shopper but are useful to the rule-based software and analysis programs. Important fields of information include product name, size, bar code (UPC) value, manufacturer, category, location in the store, unit, unit price, volume breakpoint structure, price structure timing, applicability of state and local taxes, store wholesale cost, profit margin, nutritional information, and related recipes, cooking and storage information.

Most of these fields are self-explanatory and are part of the store's existing database. Some fields (such as nutritional information and price break structure) may be complex and highly mutable from product to product. The pricing structure can change with time, allowing the shopping cart to apply time-specific "specials" without further attention from the in-house central computer 114 (Figure 14).

The category information database includes material about relationships between different groups of products that the rule base, hereinafter described, can use to make intelligent choices for displaying information and advertisements to the shopper. The software will allow for a more complicated taxonomy. In a simple example, the major fields related to the category structure might be category name, category number, complementary categories, substitute categories, default product, universal product code and related recipes, games, cooking and storage information.

The category name describes products such as hot dogs. It has an associated number for processing and indexing. Types of products that are bought with hot dogs, such as mustards, soft drinks or charcoal, represent items assigned to complementary categories. Foods that might be substituted for hot dogs (e.g., dell meats or ground beef) are located in substitute categories. The default product field contains the product in this category which should be promoted if the inference engine software identifies no others to be advertised.

The product promotion list includes a list of products to be promoted, ensuring that they are advertised to appropriate shoppers at the correct time. The major product promotion list fields for each promotable item are bar code (UPC), special promotion keys, priority level, number of times promoted and pointer to advertisement.

The bar code field contains the bar code value of the product to be promoted. It may also include bar codes of the same product in different sizes, or of other products which are somehow related to the present product and which could trigger the promotion of the present product.

Promotions could also be triggered by entries in the special promotion keys field, alone or in combination with bar code field information. This allows for scenarios such as advertising Pepsi whenever Coke is scanned, or advertising a new exotic item to gourmet shoppers. These keys and their associated rules are heavily interdependent.

The priority level and the number of times promoted fields are used to determine which of several competing ads should be displayed to the current shopper. The decision rests on a mixture of probabilistic and deterministic considerations, depending on the specific situation. For example, an advertiser might pay for an exclusive ad that is shown each time a particular category is scanned, or perhaps every third time, or even with a probability of 0.33 every time a shopper scans its category. In general, no advertisement is displayed twice to the same shopper, unless the shopper requests it.

The pointer to advertisement field contains information necessary to find and display the selected ad copy, which may be stored in any form of electronic memory or may be internally generated by the system software. For example, video disks can be used to store moving images for displaying animated advertisements. The ad copy could also be stored in different languages and an appropriate language for display selected based upon the information from the PPP file.

As indicated earlier, the inference as to which product must be advertised may include information as to the location of the customer in the store at that moment. The customer product scan and purchase history could be combined with this locational information to select product promotion. The system for promoting the sale of products in accordance with the present invention can include sensing means for indicating the location of the customer. A detector means would detect a plurality of colors such that the customer's location is indicated by selected color markings detected by the detector means. The system further comprises selected color markings located on a floor of the retail establishment to indicate the location of the customer when the detector means detects one of the selected color markings. In this manner cach aisle may have a specified color or group of colors to identify it. While it makes sense to indicate aisle locations, the retail establishment may desire to provide color markings that indicate discrete positions within an aisle for more effective advertising. Locating the selected color markings is considered the best mode because the markings would not interfere with shelf space nor would another customer be able to interfere with the detector means. Malec's system requiring transmitters located all around the store sending the coded messages to indicate the location of the cart has a definite disadvantage. It requires continuous maintenance of batteries in the transmitters scattered all around the store. The passive color markings as described herein do not have any such disadvantage. Furthermore, colored tiles and adhesive strips are readily available and a retail establishment could install such a system merely by installing the tiles or the adhesive strips. The color markings could be located across the beginning and exit of an aisle such that the system would continue to present advertising for that aisle until the customer exited the aisle.

Once the shopper has reached the check-out counter 130 (Figure 14), the session data is transferred from cart to check-out terminal 132 and thence to in-house central computer 114, as shown as step 240 (Figure 15).

The shopping cart begins processing when: (a) the shopper scans a product; (b) the shopper requests or gives information; (c) an optional location signal is received; and/or (d) a time interval has elapsed.

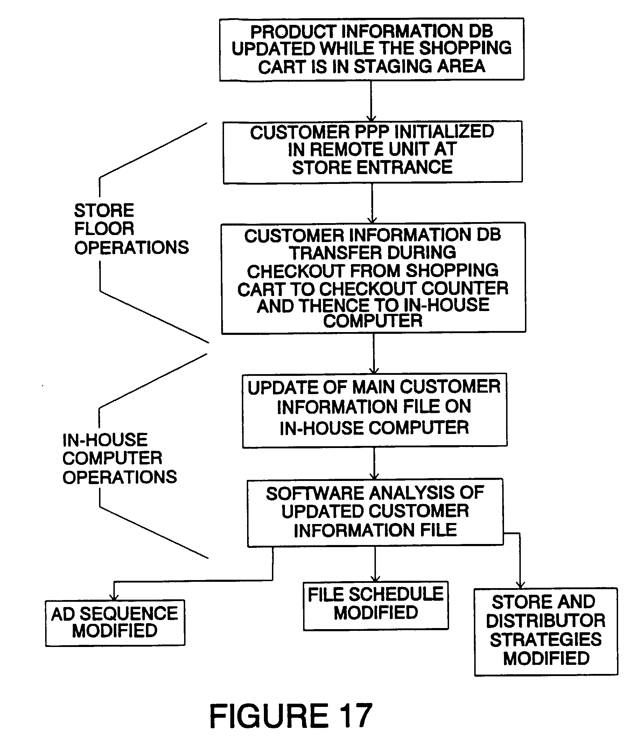

Each of these events or non-events triggers processing that determines the appropriate intelligent response. If the shopper scans a product or requests information. the shopping cart's software takes the actions indicated in Figure 17, which depicts actions related to or performed by the in-house central computer 114 (Figure 14).

To demonstrate the AI inference engine's sensitivity to user input, consider the following example of interactions between the shopping cart and a hypothetical shopper passing through the produce section of a supermarket. After the shopper removes a shopping cart from the staging area 100, a typical set of interactions might resemble the one appearing in Table 3.

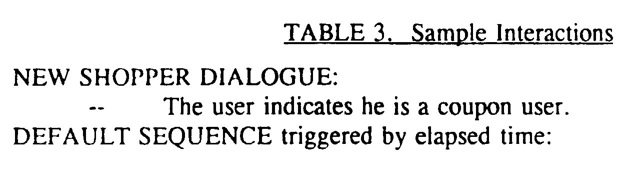

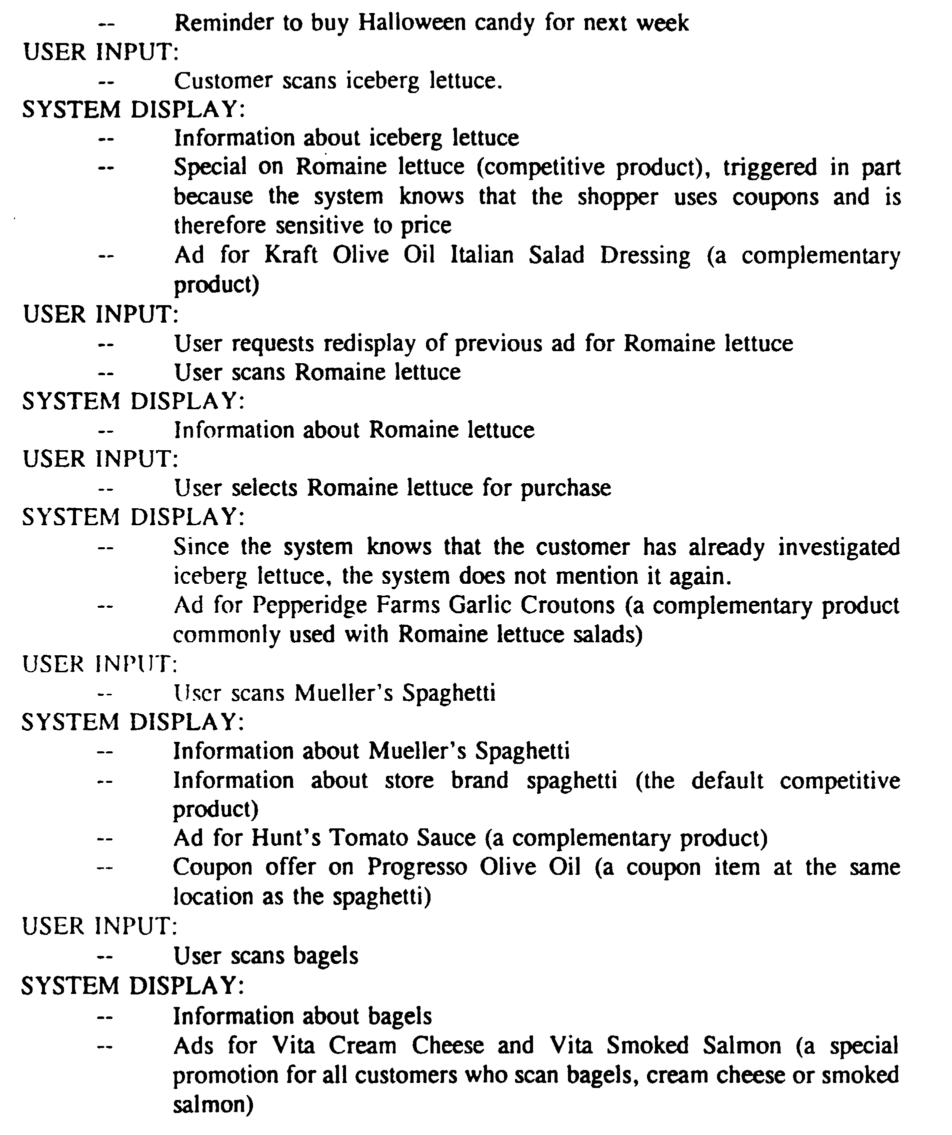

Table 3 shows only a few of the adaptations which an AI inference engine can decide upon. It also adapts to measures of a shopper's sensitivity to product price. If a shopper consistently scans the lowest cost item in each product category, the inference engine can recommend store brands of equal quality but lower price. However, it might lessen its emphasis on store brands if the shopper shows the purchase patterns of a less budget-conscious gourmet, who might feel that a highly visible display of lower-cost store brands has little value.

All of the shopper information database eventually passes to the in-house central computer 114. There is a possibility of arguments between the customer and the checkout clerk at the checkout counter if there are discrepancies between the cost totals shown on the cart and checkout terminal. The stream of bar codes from the check-out terminal 132 is compared to the list of purchases which the shopping cart transferred to it. A log of discrepancies is then generated and problems are resolved quickly without inconveniencing other customers waiting in the checkout line.

Most important to store managers and advertisers are master databases representing shopper activity. As mentioned above, the shopper information database for each customer arrives from the check-out counter 130, containing a session history log and a preference and purchase profile. Because these include a list of all bar code scans and a record of the shopping cart's rate of travel, utility programs may partially reconstruct the shopper's path through the store. Much can be inferred about the shopper's interests by examining the log of user queries.

These in-house central computer utilities merge parts of each shopping session's shopper information database (and inferences extracted from it) into a set of aggregate data-bases, which include individual shopper cumulative purchase statistics, individual shopper profiles, master advertising presentation log and master purchase selection log. Utility programs also examine the databases to determine how effective advertising is. If the store manager or advertiser makes a change in the advertising copy, the product price structure, or the product's location and presentatinn within the store, utility programs provide fast, accurate measures of the change's effectiveness.

Because the in-house central computer logs each shopper's visit, utilities can also provide demographic characterizations of a store's shopper base, revealing rates at which various groups patronize it. This is useful for determining promotional policies to be used with other advertising resources, such as newspapers or direct mail. Otlier utilities can maintain demographic timelines, normalizing them to remove fluctuations due to confounding factors such as weather or annual purchase cycles. These show long-term trends in shopper interest. A sudden change in a specific category can reveal when part of the store's shopper base has been eroded by a competitor's targeted advertising. Utility programs also handle billing for advertising services. Invoices optionally list indices of each advertisement's effectiveness, another valuable resource that the store provides to advertisers.

Since the system described here could increase a store's profits considerably, its owners would like to be sure that the rules it uses to select advertisements are tuned effectively. Software could be generated which explains to a store owner the details of the PISYS rules base. This could be done using techniques such as those used in MYCIN (a medical diagnosis expert system) and its knowledge base editor, Teiresias. (See "Artificial Intelligence and the Design of Expert Systems", by George F. Luger and William A. Stubblefield, Benjamin/Cummings, 1989, pp. 324-331.) Such software could also calculate the profits (e.g., the additional profits generated by advertising higher margin items) that accrue to the store owner because of the use of such advertisement technique. The software also could project what the profits would have been if alternate advertising rules were used. Furthermore, the output of this analysis software could be used to revise rules for selecting the advertising, and the whole system could be a "living system."

A number of embodiments for implementing the teachings of the present invention have been described hereinabove. It is anticipated that the specific implementations of the teachings of the present invention will be selected based upon the specific application of the system. For example, a food store in a metropolitan area may be more concerned with securing the remote units to shopping carts, than a food store in a rural area which might provide hand-held units for shopper convenience.

The pricing method of the present invention displays to the shopper the current prices in the cashier's counter computer database, therefore there are no discrepancies. In addition, this method provides individual product pricing information without physically affixing price labels, so the industry has its desired labor cost savings without depriving shoppers of their desired services. As shown in figures 1-13, a dedicated portable microcomputer designed to provide the customer on the supermarket floor the ability to scan the bar codes on product packages and to display the database price for the item scanned, is taught herein.

As shown in figure 1, the present invention teaches a product information system for providing a shopper with current, accurate information on individual products within retail establishment which uses bar code scanners at cashier's counters to record products of the shopper's purchase. The product information system includes a plurality of portable remote product information units to be provided for each of the shoppers within the establishment who desire access to the product information. As shown in figure 2, each of the remote units includes: 1) a bar code scanning device capable of decoding bar codes on individual products, 2) a microcomputer with database memory capable of storing and retrieving updatable product information related to each of the bar codes, 3) means for displaying the product information to the shopper, 4) means for providing the shopper with limited user-function control of the microcomputer, including manipulation of selected product information, 5) means for supplying the unit with electrical power, and 6) an input device through which the database memory can be updated. The product information system also includes a data update system capable of operatively associating with the input device and updating the remote units with updated product information related to each of the bar codes, such that the remote units are removable from the data update system for use by the shopper, and are restorable on the data update system after use by the shopper so as to be updated with the updated product information. The data update system is connected to means for supplying the data update system with updated product information, including product pricing information. such that the remote units are provided with the same updated product pricing information as provided at the bar code scanners at the cashier's counters. The product pricing information can be time stamped to become the current price at a specified time.

Each remote unit can include a rechargeable battery for supplying electrical power to the unit and an external connection mechanism. The product information system can include an electrical power bus such that the remote unit external connection mechanism is connected to the electrical power bus and the rechargeable battery is recharged through the external connection mechanism while the unit is not being used by the shopper. A staging area is shown wherein each remote unit is stored when not being used by the shopper such that the input device of the remote unit associates with the data update system and the external connection mechanism is connected to the electrical power bus when the remote unit is replaced in the staging area and is updated with product information and the rechargeable battery is recharged as the remote unit is stored at the staging area. The staging area can include rails containing electrical strips through which power for recharging the rechargeable battery in the remote units is provided through the external connection mechanism of the remote unit. The staging area can include means for assuring that the remote units are not removed before the remote units have been updated with updated product information. The product information system can incorporate the data update system and the electrical power bus in a central maintenance system.

The data update system can include an RF or IR transmitter and each of the remote units can include an appropriate RF or IR receiver for receiving signals from the transmitter such that the data update system updates the remote units with update product information through operative transmission and reception between the transmitter and receiver. The remote units can also include means for being secured to a shopping cart such that the unit can be easily used by the shopper, but can only be removed from the shopping cart by agents of the retail establishment. The remote units can include means for securing the remote unit such that the unit can be easily used by the shopper, but can only be removed from the retail establishment by agents of the retail establishment. The means for securing the remote unit could be electronically controlled such that the securing means can only be deactivated by agents of the retail establishment when an appropriate deactivation signal is provided.

The means for providing the shopper with limited user-function control of the microcomputer, including manipulation of selected product information, can allow the shopper to keep a running total and list of products intended for purchase. A remote unit interface for the bar code scanner at the cashier's counter can be provided such that the running total and list of products intended for purchase stored in the remote unit can be compared to information recorded at the bar code scanner at the cashier's counter so that any discrepancies between the information stored in the remote unit and the information recorded at the bar code scanner as the cashier's counter are identified. Furthermore, a remote unit could include a printer apparatus through which product information can be printed. This remote unit including the printer apparatus can be used by an agent of the retail establishment to print shelf labels identifying individual product pricing information so that the shelf labels can be positioned in appropriate locations throughout the retail establishment.

A central maintenance system is taught for maintaining a plurality of portable remote product information units, that are provided for shoppers within a retail establishment which uses bar code scanners at cashier's counters to record products of the shopper's purchase, wherein the remote units include a bar code scanning device capable of scanning bar codes on individual products, a microcomputer with database memory capable of storing and retrieving updatable product information related to each of the bar codes, a rechargeable battery for supplying electrical power to the unit and an external connection mechanism through which the rechargeable battery can be recharged, and an input device through which the database memory can be updated. The central maintenance system comprises: a data update system capable of operatively associating with the input device on the remote units and updating the remote units with updated product information related to each of the bar codes, such that the remote units are removable from the data update system for use by the shopper, and are restorable on the data update system after use by the shopper so as to be updated with the updated product information, including product pricing information, such that the remote units are provided with the same updated product pricing information as provided at the bar code scanners at the cashier's counters; and an electrical power bus capable of operatively connecting to the remote unit external connection mechanism and recharging the rechargeable battery through the external connection mechanism.

The teachings of the present invention include a checkout counter system to operate in conjunction with a bar code scanner at a cashier's counter in a retail establishment capable of recording information related to products to be purchased by reading bar codes affixed to the products. The checkout counter system comprises: a data interface system for receiving information from a remote unit such that a product information, including pricing information, related to a list of products intended for purchase stored in the remote unit can be recorded in the checkout counter system; and means are provided for comparing the information recorded at the bar code scanner at the cashier's counter and the information received from the remote unit so that any discrepancies between the information received from the remote unit and the information recorded at the bar code scanner as the cashier's counter are identified. The checkout counter system can further include a remote unit interface such that a signal can be provided to the remote unit which deactivates a securing mechanism such that the remote unit can be retrieved from the shopper.

The teachings of the present invention include a method of providing shoppers with current, accurate information on individual products within a retail establishment which uses bar code scanners at cashier's counters to record products of the shopper's purchase. A plurality of portable remote units are provided for each of the shoppers within the establishment who desire access to the product information. Each of the remote units include: 1) a bar code scanning device capable of decoding bar codes on individual products, 2) a microcomputer with database memory capable of storing and retrieving updatable product information related to each of the bar codes, 3) means for displaying the product information to the shopper, 4) means for providing the shopper with limited user-function control of the microcomputer, including manipulation of selected product information, 5) means for supplying the remote unit with electrical power,and 6) an input device through which the database memory can be updatcd when the unit is not being used by the shopper. The remote units are retrieved from each of the shoppers subsequent to a finished purchase. The remote units are updated with updated product information, including product pricing information, through the input device, such that the bar code scanners at the cashier's counters and the remote units are provided with exactly the same updated product pricing information. The updated remote units are then provided for further use by the shoppers. The means for supplying electrical power to the unit could be provided by a rechargeable battery and an external connection mechanism through which the rechargeable battery can be recharged. The method can further include storing a list of product information, including pricing information, related to product intended for purchase in the remote unit during use by the shopper and comparing the list of product information stored in the remote unit to product information, including pricing information recorded by the bar code scanner at the cashier's counter and identifying any discrepancies between the information stored in the remote unit and the information recorded at the bar code scanner at the cashier's counter.

The teachings of the present invention further include a method of using a portable remote bar code scanning unit including, a bar code scanning device capable of decoding bar codes, a microcomputer with database memory capable of storing and retrieving updatable product information related to each of the bar codes, means for displaying the product information, means for providing the shopper with limited user-function control of the microcomputer, means for supplying the unit with electrical power. and an input device through which the database memory can be updated. The new use comprises: providing the remote unit to shoppers within a retail establishment which uses bar code scanners at cashier's counters to record products of the shopper's purchase; retrieving the remote units from each of the shoppers subsequent to a finished purchase; updating the remote units with at least updated pricing information such that the bar code scanners at the cashier's counters and the remote units are provided with the same updated product pricing information; and providing the updated, recharged remote units for further use by the shoppers. The new use can further include storing a list of product information, including pricing information, related to product intended for purchase in the remote unit during use by the shopper and comparing the list of product information stored in the remote unit to product information, including pricing information recorded by the bar code scanner at the cashier's counter and identifying any discrepancies between the information stored in the remote unit and the information recorded at the bar code scanner at the cashier's counter.

An alarm system for the stand-alone, portable remote product information units is also provided. The alarm system comprises: 1) at least one central transmitter and receiver operatively connected to the central maintenance system; 2) remote transmitters and receivers operatively connected to the microcomputer of each of the remote units; 3) control logic within the alarm system for transmitting a signal corresponding to identification numbers of each remote unit; 4) control logic within each of the remote transmitters and receivers for responding to the signal corresponding to the identification number of that remote unit by sending a response signal to the central transmitter and receiver; 5) control logic within the alarm system for identifying any remote transmitters and receivers that have not responded; and 6) means for indicating a lost remote unit condition to the retail establishment when any remote transmitters and receivers do not respond. The alarm system can include control logic within the alarm system for making a number of tries to get the remote transmitters and receivers not responding to respond prior to indicating a lost remote unit condition, thereby reducing the number of false alarms.

A system for promoting the sale of products to a customer is provided which includes at least one remote unit. The remote unit comprising: a) means for inputting identification of a product desired by a customer; b) means for storing data representative of the product identification; c) means for storing product specifications; d) rules for selecting a product for promotion; and e) processing means operatively connected to the means for inputting product identification, and to the means for storing product specifications, and to the rules for selecting a product for promotion, the processing means being adapted to apply the rules to the data representative of the product identification and the processing means being adapted to access the stored product specifications to promote a product.

The system can further include sensing means for indicating the location of the customer. The rules used to promote products can include the customer's position. The sensing means for indicating the location of the customer can be a detector means that detects a plurality of colors such that the customer's location is indicated by selected color markings detected by the detector means. The system would include selected color markings located on a floor of a retail establishment to indicate the location of the customer when the detector means detects one of the selected color markings.

The means for inputting product identification can be a bar code scanner, under control of the customer, for scanning a universal price code. The means for inputting product identification can be a keypad. The means for characterizing the customer's interests in transactions with the system can be a voice recognition subsystem. The processing means for promoting a product can be means for generating a visual promotional message. The processing means for promoting a product can be means for generating an audible promotional message. The system for promoting the sale of products in accordance with claim 40, wherein data representative of the customer's purchasing interests, items purchased, and promotional messages presented are stored in chronological order.

The system can include means for providing a retail establishment with: customer buying habits, current product sales, a running inventory of product purchases, information for billing advertisers, and traffic patterns of customers traversing the retail establishment; and means for supplying information to individual customers about products corresponding to their current or cumulative purchases. The system can include a central computer having a data bank for keeping inventory records. a current file of product information, and a historical file of purchased items for each customer traversing the retail establishment. The central computer can be adapted to execute programs for: supplying current product information to the at least one remote unit in response to information provided by the customer in control of the at least one remote unit; and providing historical data relating to the customer's buying habits in response to requests for such information from the customer in control of the at least one remote unit. The elements of the system can be in communicative relationship by an infrared or RF communication link.

The system can include means for analyzing the running inventory of product purchases and the information for billing advertisers in order to determine the effectiveness of advertising and in order to bill advertisers appropriately.

The foregoing description has been directed to particular embodiments of the invention in accordance with the requirements of the Patent Statutes for the purposes of illustration and explanation. It will be apparent, however, to those skilled in this art that many modifications and changes will be possible. Reference is made to EPC Article 69(1) and its Protocol.

## Claims

1. A product information system for providing a shopper with current, accurate information on individual products within a retail establishment which uses bar code scanners at cashier counters and upon individual, stand-alone, portable, remote product information units under shopper control, to record shopper purchases, wherein said product information system comprises:
a) a plurality of stand-alone, portable, remote product information units, each unit being updatable with information from a remote source concerning each product within said retail establishment, each of said units to be provided for each of said shoppers within said establishment who desire access to said product information as they traverse said establishment, each of said remote stand-alone units [2] including:
i) a bar code scanning device [4] operatively connected to a microcomputer and capable of decoding bar codes on individual products,
ii) a microcomputer with database memory [3] capable of storing and retrieving updatable product information related to each bar code of a product scanned by a shopper using said bar code scanning device to obtain product information;
iii) means for displaying [5] said product information to said shopper, and operatively connected to said microcomputer,
iv) control means [6] operatively connected to said microcomputer for providing said shopper with limited user-function control of said microcomputer, including manipulation of selected product information,
v) power supply means [9] for supplying each remote product information unit with electrical power, and
vi) an input device [8] operatively connected to said microcomputer through which said database memory can be updated;
b) a data update system [21] operatively associated with each of said input devices of said plurality of stand-alone, portable, remote product information units for updating said stand-alone, portable, remote product information units with updated product information related to each of said bar codes, such that said stand-alone, portable, remote product information units are removable from said data update system for use by said respective shoppers, and are restorable on said data update system after use by said shoppers so as to be updated with said updated product information and said remote units indicate (17) whether said remote units have been updated with updated product information; and
c) means for supplying said data update system with updated product information, including product pricing information, such that said stand-alone, portable, remote product information units are provided with the same updated product pricing information as provided at said bar code scanners at said cashier counters.

2. The product information system of claim 1 further comprising:
a) a rechargeable battery [9] operatively connected to and supplying electrical power to said stand-alone, portable, remote product information unit through an external connection mechanism [7] by which said rechargeable battery can be recharged, and
b) an electrical power bus [51] within said central maintenance system operatively connecting to said stand-alone, portable remote product information unit through an external connection mechanis, said electrical power bus providing means by which said rechargeable battery of said stand-alone, portable, remote product information unit can be recharged.

3. A product information system of claim 1 or 2 wherein each of said remote units further includes electronically controlled means for securing said remote unit such that said unit can be easily used by said shopper, and said securing means can only be deactivated by agents of said retail establishment when an appropriate deactivation signal is provided.

4. A product information system of claim 2 further comprising a staging area wherein each remote unit is stored when not being used by said shopper such that said input device of said remote unit associates with said data update system and said external connection mechanism is connected to said rails when said remote unit is placed in said staging area and is updated with product information and said rechargeable battery is recharged as said remote unit is stored at said staging area.

5. A product information system of claim 1 or 2, wherein said data update system includes an RF or IR transmitter [71] and each of said remote units includes an appropriate RF or IR receiver [70] for receiving signals from said transmitter such that said data update system updates said remote units with updated product information through operative transmission and reception between said transmitter and receiver.

6. A product information system of claim I or 2, wherein said means for providing said shopper with limited user-function control of said microcomputer, including manipulation of selected product information, allows said shopper to keep a running total and list of products intended for purchase.

7. A product information system of claim 7, further comprising a remote unit interface for said bar code scanner at said cashier's counter such that said running total and list of products intended for purchase stored in said remote unit can be compared to information recorded at said bar code scanner at said cashier's counter so that any discrepancies between the information stored in said remote unit and the information recorded at said bar code scanner as said cashier's counter are identified.

8. A product information system of claim 1 or 2, wherein at least one remote unit includes a printer apparatus through which product information can be printed, wherein said retail establishment remote product information unit can be used by an agent of said retail establishment to print shelf labels in an appropriate format identifying individual product information, including pricing information and corresponding bar codes, so that said shelf labels can be positioned in appropriate locations throughout said retail establishment.

9. A product information system of claim 1, wherein said product pricing information is time stamped to become the current price at a specified time.

10. A product information system of claim 1 further compristing a checkout counter system to operate in conjunction with a bar code scanner at a cashier's counter in a retail establishment capable of recording information related to products to be purchased by reading bar codes affixed to said products, comprising:
a) a data update system for receiving information from a remote unit [2] such that product information, including pricing information, related to a list of products intended for purchase stored in said remote unit can be retrieved in said checkout counter system;
b) means for comparing said information recorded at said bar code scanner [47] at said cashier's counter and said information retrieved from said remote unit so that any discrepancies between said information received from said remote unit and said information recorded at said bar code scanner at said cashier's counter are identified.

11. A product information system of claim 10, further including a remote unit interface for said bar code scanner at said cashier's counter such that a signal can be provided to said remote unit which deactivates a securing mechanism such that said remote unit can be retrieved from said shopper.

12. A product information system of claim 1 further comprising a system for promoting the sale of products to a customer, comprising at least one remote unit, said remote unit comprising:
a) means for inputting identification of a product desired by a customer [117];
b) means for storing data representative of said product identification [115];
c) means for storing product specifications [115]; and
d) processing means [115] operatively connected to said means for inputting product identification, to said means for storing data representative of said product identification and to said means for storing product specifications, said processing means being programmed to select said identified product, a competing product to said identified product or a complementary product to said identified product for promotion based upon rules for selecting a product for promotion in response to said data representative of said product identification wherein said processing means accesses said stored product specifications and promotes a product by displaying said store product specifications of said product selected for promotion to said customer.

13. The product information system of claim 12, further comprising sensing means [122] for indicating the location of said customer, wherein said rules for selecting a product for promotion operate in response said customer's position.

14. The product information system of claim 12, wherein said means for inputting product identification comprises a bar code scanner, under control of said customer, for scanning a universal price code.

15. The product information system of claim 12, wherein said means for inputting product identification comprises a keypad.

16. The product information system of claim 12, wherein said means for inputting product identification comprises a voice recognition subsystem.

17. The product information system of claim 12, wherein said processing means for promoting a product comprises means for generating a visual promotional message.

18. The product information system of claim 12, wherein said processing means for promoting a product comprises means for generating an audible promotional message.

19. The product information system of claim 12, wherein data representative of said customer's purchasing interests, items purchased, and promotional messages presented are stored in chronological order.

20. The product information system of claim 12, further comprising:
f) means for providing a retail establishment with: customer buying habits, current product sales, a running inventory of product purchases, information for billing advertisers, and traffic patterns of customers traversing said retail establishment; and
g) means for supplying information to individual customers about products corresponding to their current or cumulative purchases.

21. The product information system of claim 20, wherein said elements (f) and (g) comprise a central computer having a data bank for keeping inventory records, a current file of product information, and a historical file of purchased items for each customer traversing said retail establishment.

22. The product information system of claim 21, wherein said central computer is adapted to execute programs for:
i) supplying current product information to said at least one remote unit in response to information provided by said customer in control of said at least one remote unit; and
ii) providing historical data relating to said customer's buying habits in response to requests for such information from said customer in control of said at least one remote unit.

23. The product information system of claim 22, further comprising means for analyzing said running inventory of product purchases and said information for billing advertisers in order to determine the effectiveness of advertising and in order to bill advertisers appropriately.

24. The product information system of claim 13, wherein said sensing means for indicating the location of said customer comprise a detector means that detects a plurality of colors such that said customer's location is indicated by selected color markings detected by said detector means.

25. The product information system of claim 12, further comprising means for keeping and analyzing a running inventory of product purchases and information for billing advertisers in order to determine the effectiveness of advertising and in order to bill advertisers appropriately.

## Patentansprüche

1. Ein Wareninformations-Anzeigesystem um einen Käufer mit laufender, genauer Information über einzelne Waren innerhalb eines Einzelhandels-Unternehmens, das Strichmarkierungsleser an Kassierer-Schaltern und auf einzelnen, unabhängigen, tragbaren Fern-Wareninformations-Einheiten unter Steuerung des Käufers benutzt um Käufe des Käufers aufzuzeichnen, zu versehen, wobei besagtes Wareninformations-Anzeigesystem aufweist:
a) eine Mehrzahl von unabhängigen, tragbaren Fern-Wareninformations-Einheiten, wobei jede Einheit mit Information aus einer entfernten Quelle betreffend jede Ware innerhalb besagten Einzelhandels-Unternehmens auffrischbar ist, wobei jede der besagten Einheiten für jeden besagten Käufer in besagtem Unternehmen zur Verfügung zu stellen ist, die Zugang zu besagter Wareninformation wünschen, während sie besagtes Unternehmen durchqueren, wobei jede besagter, unabhängiger Fern-Einheiten (2) aufweist:
i) eine Strichmarkierungsleseeinrichtung (4), die mit einem Mikrocomputer in Wirkverbindung steht und Strichmarkierungen auf einzelnen Waren entschlüsseln kann,
ii) einen Mikrocomputer mit Datenbankspeicher (3), der in der Lage ist, auffrischbare Wareninformation, die zu jeder Strichmarkierung einer Ware, die durch einen Käufer, der besagte Strichmarkierungslesevorrichtung benutzt, um Wareninformation zu erhalten, gelesen wird, in Beziehung steht, zu speichern und wiederzugewinnen;
iii) Einrichtungen um besagte Wareninformation besagtem Käufer darzustellen (5) und die mit besagtem Mikrocomputer in Wirkverbindung stehen,
iv) Steuerungseinrichtungen (6), die mit besagtem Mikrocomputer in Wirkverbindung stehen, um besagten Käufer mit begrenzter Benutzer-Bedienungs-Steuerung besagten Mikrocomputers zu versehen, einschließlich der Handhabung ausgewählter Wareninformation,
v) Stromversorgungseinrichtungen (9) um jede Fern-Wareninformations-Einheit mit elektrischem Strom zu versorgen, und
vi) eine Eingabevorrichtung (8), die mit besagtem Mikrocomputer in Wirkverbindung steht, durch die besagter Datenbankspeicher aufgefrischt werden kann;
b) ein Datenauffrischsystem (21), das jeder besagter Eingabevorrichtungen besagter Mehrzahl von unabhängigen, tragbaren Fern-Wareninformations-Einheiten operativ zugeordnet ist, um besagte unabhängige, tragbare Fern-Wareninformations-Einheiten mit aufgefrischter Wareninformation aufzufrischen, die zu jeder besagter Strichmarkierungen in Beziehung steht, derart, daß besagte unabhängige, tragbare Fern-Wareninformations-Einheiten von besagtem Datenauffrischsystem zur Benutzung durch besagte jeweilige Käufer entfernbar sind, und auf besagtes Datenauffrischsystem nach der Benutzung durch besagte Käufer wiederanbringbar sind, um mit besagter aufgefrischter Wareninformation aufgefrischt zu werden und besagte Fern-Einheiten anzeigen (17), ob besagte Fern-Einheiten mit aufgefrischter Wareninformation aufgefrischt worden sind; und
c) Einrichtungen um besagtes Datenauffrischsystem mit aufgefrischter Wareninformation zu versorgen, einschließlich Warenpreisstellungsinformation, derart, daß besagte unabhängige, tragbare Fern-Wareninformations-Einheiten mit der gleichen aufgefrischten Warenpreisstellungsinformation wie sie bei besagten Strichmarkierungslesern an besagten Kassierer-Schaltern bereitgestellt werden, versorgt werden.

2. Das Wareninformations-Anzeigesystem des Anspruchs 1, das weiter aufweist:
a) eine wiederaufladbare Batterie (9), die in Wirkverbindung steht mit und elektrischen Strom liefert an besagte unabhängige, tragbare Fern-Wareninformations-Einheit durch einen äußeren Verbindungsmechanismus (7), durch den besagte wiederaufladbare Batterie wiederaufgeladen werden kann, und
b) eine elektrische Stromanschlußleitung (51) innerhalb besagten zentralen Bestandsführungssystems, die sich mit besagter unabhängiger, tragbarer Fern-Wareninformations-Einheit durch einen äußeren Verbindungsmechanismus operativ verbindet, wobei besagte elektrische Verbindungsleitung Einrichtungen schafft, durch die besagte wiederaufladbare Batterie besagter unabhängiger, tragbarer Fern-Wareninformations-Einheit wiederaufgeladen werden kann.

3. Ein Wareninformations-Anzeigesystem des Anspruchs 1 oder 2, wobei jede besagter Fern-Einheiten weiter elektronisch gesteuerte Einrichtungen zum Sichern besagter Fern-Einheit derart, daß besagte Einheit leicht durch besagten Käufer benutzt werden kann, aufweist, und besagte Sicherungseinrichtungen nur durch Beauftragte besagten Einzelhandels-Unternehmens deaktiviert werden können, wenn ein geeignetes Deaktivierungssignal bereitgestellt wird.

4. Ein Wareninformations-Anzeigesystem des Anspruchs 2, das weiter einen Abstellbereich aufweist, worin jede Fern-Einheit aufbewahrt wird, wenn sie nicht durch besagten Käufer benutzt wird, derart, daß besagte Eingabe-Einrichtung besagter Fern-Einheit sich mit besagtem Datenauffrischsystem verbindet und besagter äußerer Verbindungs-Mechanismus mit besagten Schienen verbunden wird, wenn besagte Fern-Einheit in besagtem Abstellbereich angeordnet wird, und mit Wareninformation aufgefrischt wird, und besagte wiederaufladbare Batterie wiederaufgeladen wird, während besagte Fern-Einheit bei besagtem Abstellbereich aufbewahrt wird.

5. Ein Wareninformations-Anzeigesystem des Anspruchs 1 oder 2, wobei besagtes Datenauffrischsystem einen Hochfrequenz- oder Infrarot-Sender (71) aufweist, und jede besagter Fern-Einheiten einen geeigneten Hochfrequenz- oder Infrarot-Empfänger (70) aufweist, um Signale von besagtem Sender zu empfangen, derart, daß besagtes Datenauffrischsystem besagte Fern-Einheiten mit aufgefrischter Wareninformation auffrischt durch Wirk-Sendung und -Empfang zwischen besagtem Sender und Empfänger.

6. Ein Wareninformations-Anzeigesystem des Anspruchs 1 oder 2, wobei besagte Einrichtungen um besagten Käufer mit begrenzter Benutzer-Bedienungs-Steuerung besagten Mikrocomputers zu versorgen, einschließlich Handhabung ausgewählter Wareninformation, besagtem Käufer erlauben, eine laufende Gesamtsumme und Liste von Waren, deren Kauf beabsichtigt ist, zu führen.

7. Ein Wareninformations-Anzeigesystem des Anspruchs 7, das weiter eine Fern-Einheit-Schnittstelle für besagten Strichmarkierungsleser bei besagtem Kassierer-Schalter aufweist, derart, daß besagte laufende Gesamtsumme und Liste von Waren, deren Kauf beabsichtigt ist, die in besagter Fern-Einheit gespeichert sind, mit Information, die bei besagtem Strichmarkierungsleser bei besagtem Kassierer-Schalter aufgezeichnet wird, verglichen werden kann, so daß jegliche Abweichungen zwischen der in besagter Fern-Einheit gespeicherten Information und der bei besagtem Strichmarkierungsleser bei besagtem Kassierer-Schalter aufgezeichneten Information erkannt werden.

8. Ein Wareninformations-Anzeigesystem des Anspruchs 1 oder 2, wobei mindestens eine Fern-Einheit ein Druckgerät aufweist, durch das Wareninformation gedruckt werden kann, wobei besagte Einzelhandels-Unternehmen-Fern-Wareninformations-Einheit als ein Werkzeug besagten Einzelhandels-Unternehmens, um Regalschilder in einem geeigneten Format, die einzelne Wareninformation ausweisen, einschließlich Preisstellungsinformation und entsprechende Strichmarkierungen, zu drucken, so daß besagte Regalschilder an geeigneten Stellen im gesamten besagten Einzelhandels-Unternehmen aufgestellt werden können.

9. Ein Wareninformations-Anzeigesystem des Anspruchs 1, wobei besagte Warenpreisstellungsinformation mit einem Zeitaufdruck versehen ist, um der gegenwärtige Preis zu einer bestimmten Zeit zu werden.

10. Ein Wareninformations-Anzeigesystem des Anspruchs 1, das weiter ein Ausstempel-Schalter-System, um im Zusammenwirken mit einem Strichmarkierungsleser an einem Kassierer-Schalter in einem Einzelhandels-Unternehmen, das in der Lage ist, Information, die in Beziehung zu zu kaufende Waren steht, durch Lesen von Strichmarkierungen, die an besagten Waren angebracht sind, aufzuzeichnen, zu arbeiten, aufweist, und das aufweist:
a) ein Datenauffrischsystem um Information von einer Fern-Einheit (2) zu empfangen derart, daß Wareninformation, einschließlich Preisstellungsinformation, die in Beziehung zu einer Liste von Waren, deren Kauf beabsichtigt ist, die in besagter Fern-Einheit gespeichert ist, in besagtem Ausstempel-Schalter-System wiedergewonnen werden kann;
b) Einrichtungen, um besagte Information, die bei besagtem Strichmarkierungsleser (47) bei besagtem Kassierer-Schalter aufgezeichnet wird und besagte Information, die aus besagter Fern-Einheit wiedergewonnen ist, zu vergleichen, derart, daß jegliche Abweichungen zwischen besagter Information, die von besagter Fern-Einheit empfangen wurde, und besagter Information die bei besagtem Strichmarkierungsleser bei besagtem Kassierer-Schalter aufgezeichnet wird, erkannt werden.

11. Ein Wareninformations-Anzeigesystem des Anspruchs 10, das weiter eine Fern-Einheit-Schnittstelle für besagten Strichmarkierungsleser bei besagtem Kassierer-Schalter aufweist, derart, daß besagter Fern-Einheit ein Signal bereitgestellt werden kann, das einen Sicherungsmechansimus deaktiviert, derart, daß besagte Fern-Einheit von besagtem Käufer erlangt werden kann.

12. Ein Wareninformations-Anzeigesystem des Anspruchs 1, das weiter ein System für die Förderung des Verkaufs von Waren an einen Kunden aufweist, das mindestens eine Fern-Einheit aufweist, wobei besagte Fern-Einheit aufweist:
a) Einrichtungen zum Eingeben der Kennzeichnung einer Ware, die durch einen Kunden gewünscht wird (117);
b) Einrichtungen zum Speichern von Daten die besagte Warenkennzeichnung (115) darstellen;
c) Einrichtungen zum Speichern von Waren-Einzelangaben (115); und
d) Verarbeitungseinrichtungen (115), die mit besagten Einrichtungen zum Eingeben von Warenkennzeichnung, mit besagten Einrichtungen zum Speichern von Daten, die besagte Warenkennzeichnung darstellen, und mit besagten Einrichtungen zum Speichern von Waren-Einzelangaben in Wirkverbindung stehen, wobei besagte Verarbeitungseinrichtungen programmiert sind um besagte gekennzeichnete Ware auszuwählen, eine Wettbewerbsware zu besagter gekennzeichneter Ware oder eine Ergänzungsware zu besagter gekennzeichneter Ware zur Verkaufsförderung, beruhend auf Regeln zum Auswählen einer Ware zur Verkaufsförderung in Antwort auf besagte Daten, die besagte Warenkennzeichnung darstellen, wobei besagte Verarbeitungseinrichtungen auf besagte gespeicherte Waren-Einzelangaben zugreifen und den Verkauf einer Ware durch das besagtem Kunden Darstellen besagter Speicher-Waren-Einzelangaben besagter Ware, die zur Verkaufsförderung ausgewählt ist, fördern.

13. Das Wareninformations-Anzeigesystem des Anspruchs 12, das weiter Fühleinrichtungen (122) um den Ort des besagten Kunden anzuzeigen, wobei besagte Regeln zum Auswählen einer Ware zur Verkaufsförderung in Antwort auf die Stellung des besagten Kunden arbeiten, aufweist.

14. Das Wareninformations-Anzeigesystem des Anspruchs 12, wobei besagte Einrichtungen zum Eingeben von Warenkennzeichnung einen Strichmarkierungsleser aufweisen, der unter der Kontrolle des besagten Kunden ist, zum Lesen einer allgemeinen Preismarkierung.

15. Das Wareninformations-Anzeigesystem des Anspruchs 12, wobei besagte Einrichtungen zum Eingeben von Warenkennzeichnung ein Tastenfeld aufweisen

16. Das Wareninformations-Anzeigesystem des Anspruchs 12, wobei besagte Einrichtungen zum Eingeben von Warenkennzeichnung ein Spracherkennungs-Untersystem aufweisen.

17. Das Wareninformations-Anzeigesystem des Anspruchs 12, wobei besagte Verarbeitungseinrichtungen zur Verkaufsförderung einer Ware Einrichtungen zum Erzeugen einer optischen Verkaufsförderungsbotschaft aufweisen.

18. Das Wareninformations-Anzeigesystem des Anspruchs 12, wobei besagte Verarbeitungseinrichtungen zur Verkaufsförderung einer Ware Einrichtungen zum Erzeugen einer akustischen Verkaufsförderungsbotschaft aufweisen.

19. Das Wareninformations-Anzeigesystem des Anspruchs 12, wobei Daten, die für die Kaufinteressen des besagten Kunden kennzeichnend sind, gekaufte Gegenstände und Verkaufsförderungsbotschaften, die dargeboten werden, in zeitlicher Abfolge gespeichert werden.

20. Das Wareninformations-Anzeigesystem des Anspruchs 12, das weiter aufweist:
f) Einrichtungen um ein Einzelhandels-Unternehmen zu versehen mit: Kundenkaufgewohnheiten, laufende Warenverkäufe, eine laufende Liste von Warenkäufen, Information um Werbenden Rechnungen zu stellen, und Verkehrsmuster von Kunden, die besagtes Einzelhandels-Unternehmen durchqueren; und
g) Einrichtungen um einzelnen Kunden Information über Waren zu liefern, die ihren laufenden oder angesammelten Käufen entsprechen.

21. Das Wareninformations-Anzeigesystem des Anspruchs 20, wobei besagte Bestandteile (f) und (g) einen Zentralrechner mit einer Datenbank um Inventaraufzeichnungen zu führen, einer laufenden Datei von Wareninformation und einer Datei für die Vergangenheit von gekauften Gegenständen für jeden Kunden, der besagtes Einzelhandels-Unternehmen durchquert, aufweisen.

22. Das Wareninformations-Anzeigesystem des Anspruchs 21, wobei besagter Zentralrechner eingerichtet ist um Programme auszuführen für:
i) jener besagten mindestens einen Fern-Einheit laufende Wareninformation in Antwort auf Information, die durch besagten Kunden, der besagte mindestens eine Fern-Einheit steuert, bereitgestellt wird, zu liefern; und
ii) Bereitstellen von vergangenen Daten, die in Beziehung stehen zu den Kaufgewohnheiten des besagten Kunden in Antwort auf Nachfragen nach solcher Information von besagtem Kunden, der besagte mindestens eine Fern-Einheit steuert.

23. Das Wareninformations-Anzeigesystem des Anspruchs 22, das weiter Einrichtungen zum Analysieren besagter laufender Liste von Warenkäufen und besagter Information um Werbenden Rechnungen zu stellen, um die Wirksamkeit von Werbung zu bestimmen und um Werbenden passende Rechnungen zu stellen, aufweist.

24. Das Wareninformations-Anzeigesystem des Anspruchs 13, wobei besagte Fühleinrichtungen um den Ort des besagten Kunden anzuzeigen Spüreinrichtungen aufweisen, die eine Mehrzahl von Farben spürt derart, daß der Ort des besagten Kunden durch ausgewählte Farbmarken, die durch besagte Spüreinrichtungen gespürt werden, angezeigt wird.

25. Das Wareninformations-Anzeigesystem des Anspruchs 12, das weiter Einrichtungen zum Führen und Analysieren einer laufenden Liste von Warenkäufen und Information um Werbenden Rechnungen zu stellen, um die Wirksamkeit von Werbung zu bestimmen und um Werbenden passende Rechnungen zu stellen, aufweist.

## Revendications

1. Système d'Information sur les produits pour fournir à une personne faisant ses courses des informations actuelles, précises, sur des produits particuliers dans un établissement de commerce de détail qui utilise des scanneurs de codes à barres aux caisses et sur des unités d'information à distance sur les produits, individuelles, autonomes, portatives, sous le contrôle de la personne faisant ses courses, pour enregistrer les achats de la personne faisant ses courses, dans lequel ledit système d'information sur les produits comprend:
a) une pluralité d'unités d'information à distance sur les produits, autonomes, portatives, chaque unité pouvant être mise à jour avec des informations d'une source à distance relatives à chaque produit dans ledit établissement de commerce de détail, chacune desdites unités devant être prévue pour chacune desdites personnes faisant leurs courses dans ledit établissement de commerce de détail qui souhaitent avoir accès auxdites informations sur les produits quand elles se déplacent dans ledit établissement, chacune desdites unités à distance autonomes [2] comprenant:
i) un dispositif pour scanner [4] les codes à barres connecté opérationnellement à un micro-ordinateur et capable de décoder les codes à barres sur les différents produits,
ii) un micro-ordinateur [3] avec une mémoire de base de données capable de stocker et de récupérer des informations sur les produits pouvant être mises à jour, liées à chaque code à barres d'un produit scanné par une personne faisant ses courses en utilisant ledit dispositif pour scanner les codes à barres afin d'obtenir des informations sur les produits,
iii) un moyen pour afficher [5] lesdites informations sur les produits pour ladite personne faisant ses courses, et connecté opérationnellement audit micro-ordinateur,
iv) un moyen de contrôle [6] connecté opérationnellement audit micro-ordinateur pour fournir à ladite personne faisant ses courses un contrôle limité à la fonction utilisateur dudit micro-ordinateur, y compris la manipulation des informations sur les produits choisis,
v) des moyens d'alimentation [9] pour fournir de l'énergie électrique à chaque unité d'information à distance sur les produits, et
vi) un dispositif d'entrée [8] connecté opérationnellement audit micro-ordinateur par lequel la mémoire de base de données peut être mise à jour,
b) un système de mise à jour des données [21] associé opérationnellement avec chacun desdits dispositifs d'entrée de ladite pluralité d'unités d'information à distance sur les produits, autonomes, portatives, pour mettre à jour lesdites unités d'information à distance sur les produits, autonomes, portatives, avec des informations sur les produits mises à jour, liées à chacun desdits codes à barres, de manière telle que lesdites unités d'information à distance sur les produits, autonomes, portatives, peuvent être séparées dudit système de mise à jour des données pour être utilisées par lesdites différentes personnes faisant leurs courses et peuvent être replacées sur ledit système de mise à jour des données après utilisation par lesdites personnes faisant leurs courses de manière à être mis à jour avec lesdites informations sur les produits mises à jour et lesdites unités à distance indiquent [17] si lesdites unités à distance ont été mises à jour avec les informations sur les produits mises à jour, et
c) des moyens pour fournir audit système de mise à jour des données des informations sur les produits mises à jour, y compris des informations sur le prix des produits, de manière telle que lesdites unités d'information à distance sur les produits, autonomes, portatives, sont pourvues des mêmes informations de prix sur les produits mises à jour que celles fournies auxdits scanneurs de codes à barres auxdites caisses.

2. Système d'information sur les produits de la revendication 1 comprenant en outre:
a) une batterie [9] rechargeable connectée opérationnellement à l'unité d'information à distance sur les produits, autonome, portative, et lui fournissant de l'énergie électrique par l'intermédiaire d'un mécanisme [7] externe de connexion par lequel ladite batterie rechargeable peut être rechargée, et
b) une barre collectrice d'énergie électrique [51] dans ledit système central de maintenance se connectant opérationnellement à ladite unité d'information à distance sur les produits, autonome, portative, par l'intermédiaire d'un mécanisme de connexion externe, ladite barre collectrice d'énergie électrique fournissant des moyens par lesquels ladite batterie rechargeable de ladite unité d'information à distance sur les produits, autonome, portative, peut être rechargée.

3. Système d'information sur les produits de la revendication 1 ou 2, dans lequel chacune desdites unités à distance comprend en outre des moyens commandés électroniquement pour fixer ladite unité à distance de manière telle que ladite unité peut facilement être utilisée par ladite personne faisant ses courses, et lesdits moyens de fixation ne peuvent être désactivés que par des agents dudit établissement de commerce de détail quand un signal de désactivation approprié est fourni.

4. Système d'information sur les produits de la revendication 2 comprenant, en outre, une zone de rangement dans laquelle chaque unité à distance est entreposée quand elle n'est pas utilisée par ladite personne faisant ses courses de manière telle que ledit dispositif d'entrée de ladite unité à distance s'associe audit système de mise à jour des données et ledit mécanisme externe de connexion est connecté auxdits rails quand ladite unité à distance est placée dans ladite zone de rangement et est mise à jour avec les informations sur les produits et ladite batterie rechargeable est rechargée quand ladite unité à distance est entreposée dans ladite zone de rangement.

5. Système d'information sur les produits de la revendication 1 ou 2, dans lequel le système de mise à jour des données comprend un transmetteur [71] de fréquence radio ou à infrarouge et chacune desdites unités à distance comprend un récepteur [70] de fréquence radio ou à infrarouge pour recevoir des signaux dudit transmetteur de manière telle que ledit système de mise à jour des données met à jour lesdites unités à distance avec des informations sur les produits mises à jour par transmission et réception opératoires entre lesdits transmetteur et récepteur.

6. Système d'information sur les produits de la revendication 1 ou 2, dans lequel ledit moyen pour fournir à ladite personne faisant ses courses un contrôle limité à la fonction utilisateur dudit micro-ordinateur, y compris la manipulation des informations sur les produits choisis, permet à ladite personne faisant ses courses de garder un total courant et une liste des produits destinés à l'achat.

7. Système d'information sur les produits de la revendication 7 comprenant, en outre, une interface d'unité à distance pour ledit scanneur de codes à barres à ladite caisse de manière telle que ledit total courant et ladite liste de produits destinés à l'achat stockés dans ladite unité à distance peuvent être comparés avec les informations enregistrées dans ledit scanneur de codes à barres à ladite caisse de manière telle que des divergences entre les informations stockées dans ladite unité à distance et les informations enregistrées dans ledit scanneur de codes à barres à ladite caisse sont identifiées.

8. Système d'information sur les produits de la revendication 1 ou 2, dans lequel au moins une unité à distance comprend un appareil d'impression par l'intermédiaire duquel les informations sur les produits peuvent être imprimées, dans lequel ladite unité d'information à distance sur les produits de l'établissement de commerce de détail peut être utilisée par un agent dudit établissement de commerce de détail pour imprimer des étiquettes de rayon dans un format approprié identifiant les informations sur les produits particuliers, y compris les informations sur les prix et les codes à barres correspondants, de manière telle que lesdites étiquettes de rayon peuvent être positionnées dans des endroits appropriés dans tout ledit établissement de commerce de détail.

9. Système d'information sur les produits de la revendication 1, dans lequel lesdites informations sur le prix des produits sont horodatées pour devenir le prix du jour à un moment spécifié.

10. Système d'information sur les produits de la revendication 1 comprenant, en outre, un système de pointage à faire fonctionner conjointement avec un scanneur de codes à barres à une caisse dans un établissement de commerce de détail, capable d'enregistrer des informations relatives aux produits à acheter en lisant les codes à barres apposés sur lesdits produits, comprenant:
a) un système de mise à jour des données pour recevoir des informations d'une unité à distance [2] de manière telle que les informations sur les produits, y compris les informations sur les prix, portant sur une liste de produits destinés à l'achat, stockées dans ladite unité à distance peuvent être récupérées dans ledit système de pointage,
b) des moyens pour comparer lesdites informations enregistrées dans ledit scanneur de codes à barres à ladite caisse et les informations extraites de ladite unité à distance de manière telle que toute divergence entre lesdites informations reçues de ladite unité à distance et lesdites informations enregistrées dans ledit scanneur de codes à barres à la caisse sont identifiées.

11. Système d'information sur les produits de la revendication 10 comprenant, en outre, une interface d'unité à distance pour ledit scanneur de codes à barres à la caisse de manière telle qu'un signal peut être fourni à ladite unité à distance qui désactive un mécanisme de fixation de manière telle que ladite unité peut être reprise à ladite personne faisant ses courses.

12. Système d'information sur les produits de la revendication 1 comprenant, en outre, un système pour promouvoir la vente de produits à un client, comprenant au moins une unité à distance, ladite unité à distance comprenant:
a) un moyen pour entrer l'identification [117] d'un produit désiré par un client,
b) un moyen pour stocker des données [115] représentatives de ladite identification du produit,
c) un moyen pour stocker les spécifications [155] des produits, et
d) un moyen de traitement [115] connecté opérationnellement audit moyen pour entrer l'identification du produit, audit moyen pour stocker des données représentatives de ladite identification du produit, audit moyen pour stocker les spécifications des produits, ledit moyen de traitement étant programmé pour sélectionner ledit produit identifié, un produit rival dudit produit identifié ou un produit complémentaire audit produit identifié pour une promotion basée sur des règles de sélection d'un produit pour une promotion en réponse auxdites données représentatives de ladite identification du produit, dans lequel ledit moyen de traitement accède auxdites spécifications stockées du produit et promeut un produit en affichant lesdites spécifications stockées dudit produit sélectionné pour une promotion pour ledit client.

13. Système d'information sur les produits de la revendication 12 comprenant, en outre, un moyen de détection [122] pour indiquer l'endroit où se trouve ledit client, dans lequel lesdites règles de sélection d'un produit pour une promotion fonctionnent en réponse à la position de ledit client.

14. Système d'information sur les produits de la revendication 12, dans lequel ledit moyens pour entrer l'identification du produit comprend un scanneur de codes à barres, sous le contrôle de ladite personne faisant ses courses, pour scanner un code universel de prix.

15. Système d'information sur les produits de la revendication 12, dans lequel ledit moyen pour entrer l'identification du produit comprend un clavier.

16. Système d'information sur les produits de la revendication 12, dans lequel le moyen pour entrer l'identification du produit comprend un sous-système de reconnaissance vocale.

17. Système d'information sur les produits de la revendication 12, dans lequel ledit moyen de traitement pour promouvoir un produit comprend des moyens pour générer un message visuel de promotion.

18. Système d'information sur les produits de la revendication 12, dans lequel ledit moyen de traitement pour promouvoir un produit comprend des moyens pour générer un message audible de promotion.

19. Système d'information sur les produits de la revendication 12, dans lequel les données représentatives des intérêts d'achat dudit client, les articles achetés et les messages de promotion présentés sont stockés en ordre chronologique.

20. Système d'information sur les produits de la revendication 12 comprenant en outre:
f) des moyens pour fournir à un établissement de commerce de détail: les habitudes d'achat des clients, les dernières ventes de produits, un inventaire courant des achats de produits, des informations pour facturer les publicistes et les itinéraires suivis par les clients qui se déplacent dans ledit établissement de commerce de détail, et
g) des moyens pour fournir des informations aux différents clients sur des produits correspondant à leurs derniers achats ou à leurs achats répétés.

21. Système d'information sur les produits de la revendication 20, dans lequel lesdits éléments [f] et [g] comprennent un ordinateur central ayant une banque de données pour garder des archives d'inventaire, un fichier courant avec les informations sur les produits, et un fichier historique des articles achetés pour chaque client se déplaçant dans ledit établissement de commerce de détail.

22. Système d'information sur les produits de la revendication 21, dans lequel ledit ordinateur central est adapté pour exécuter des programmes pour:
i) fournir les dernières informations sur les produits à ladite au moins une unité à distance en réponse aux informations fournies par ledit client ayant le contrôle de ladite au moins une unité à distance, et
ii) fournir les données historiques relatives aux habitudes d'achat dudit client en réponse aux demandes de ces informations de la part dudit client ayant le contrôle de ladite au moins une unité à distance.

23. Système d'information sur les produits de la revendication 22 comprenant, en outre, des moyens pour analyser ledit inventaire courant des achats de produits et lesdites informations pour facturer les publicistes afin de déterminer l'efficacité de la publicité et afin de facturer les publicistes de manière appropriée.

24. Système d'information sur les produits de la revendication 13, dans lequel ledit moyen de détection pour indiquer l'endroit où ledit client se trouve comprend un détecteur qui détecte une pluralité de couleurs de manière telle que l'endroit où le client se trouve est indiqué par des marques de couleurs sélectionnées détectées par ledit moyen de détection.

25. Système d'information sur les produits de la revendication 12 comprenant, en outre, des moyens pour tenir et analyser un inventaire courant des achats de produits et des informations pour facturer les publicistes afin de déterminer l'efficacité de la publicité et afin de facturer les publicistes de manière appropriée.
